(19) Europäisches Patentamt
European Patent Office
Office européen des brevets

(11) **EP 2 852 050 B1**

(12) **FASCICULE DE BREVET EUROPEEN**

(45) Date de publication et mention
de la délivrance du brevet:
**06.06.2018 Bulletin 2018/23**

(51) Int Cl.:
***H02P 29/032*** *(2016.01)*     ***H02P 29/024*** *(2016.01)*

(21) Numéro de dépôt: **13185044.8**

(22) Date de dépôt: **18.09.2013**

(54) **Méthode et dispositif de génération de n (n>=3) signaux de commande pour commander un onduleur à n phases**

Methode und Vorrichtung zur Erzeugung von n (n>=3) Steuersignalen zum Steuern eines Wechselrichters mit n Phasen

Method and device for generating n (n >= 3) control signals for controlling an inverter with n phases

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**25.03.2015 Bulletin 2015/13**

(73) Titulaire: **Sociéte Anonyme Belge de Constructions Aéronautiques, S.A.B.C.A.
1130 Bruxelles (BE)**

(72) Inventeurs:
- **Alexandre, Paul
  1130 Bruxelles (BE)**
- **Telteu-Nedelcu, Dan
  1130 Bruxelles (BE)**

(74) Mandataire: **Quintelier, Claude et al
B.v.b.a. Koala
Calabriëlaan 53/9
1200 Bruxelles (BE)**

(56) Documents cités:
**US-A1- 2011 221 366    US-B2- 6 949 908**

- **LIU T-H ET AL: "A strategy for improving reliability of field oriented controlled induction motor drives", PROCEEDINGS OF THE INDUSTRY APPLICATIONS SOCIETY ANNUAL MEETING. DEARBORN, SEPT. 28 - OCT. 1, 1991; [PROCEEDINGS OF THE INDUSTRY APPLICATIONS SOCIETY ANNUAL MEETING], NEW YORK, IEEE, US, vol. -, 28 septembre 1991 (1991-09-28), pages 449-455, XP010056171, DOI: 10.1109/IAS.1991.178194 ISBN: 978-0-7803-0453-6**
- **FRANÃ PRG OIS BAUDART ET AL: "Torque Control Strategy of Polyphase Permanent-Magnet Synchronous Machines With Minimal Controller Reconfiguration Under Open-Circuit Fault of One Phase", IEEE TRANSACTIONS ON INDUSTRIAL ELECTRONICS, IEEE SERVICE CENTER, PISCATAWAY, NJ, USA, vol. 59, no. 6, 1 juin 2012 (2012-06-01), pages 2632-2644, XP011448845, ISSN: 0278-0046, DOI: 10.1109/TIE.2011.2170393**

## Description

La présente invention concerne une méthode selon la revendication 1 et un dispositif selon la revendication 17 de génération de n (n≥3) signaux de commande ($i_k^*, v_k^*$) utilisés pour déterminer les signaux de commutation des interrupteurs d'un onduleur à n phases connecté à une machine électrique opérant à n phases, lesquels signaux de commandes sont générés à partir de n signaux primaires de commande ($i_k, v_k$) fournis et déterminés par un générateur de consignes faisant partie d'un régulateur de courant agencé pour obtenir un couple de référence prédéterminé, lesquels signaux de commutation sont appliqués à l'onduleur afin de faire circuler n courants électriques dans la machine pour y produire le couple de référence prédéterminé, dans laquelle méthode on mesure à l'aide de capteurs dans chacune desdites n phases de la machine une valeur instantanée du courant circulant dans chacune des phases, et qu'on échantillonne lors de chacun des cycles de calcul ces valeurs instantanées des n courants ($i_{mk}(t)$).

Cette méthode de commande est connue de l'article de Liu Tian-Hua et al intitulé « A strategy for improving reliability of field oriented controlled induction motor drives » paru dans Proceedings of the industry applications society annual meeting, Deaborn, septembre 28 à octobre 1, 1991 pages 449 à 455. La demande de brevet US 2011/0221366 décrit également une telle méthode de commande. Cette méthode est appliquée à des systèmes d'entraînement électrique tolérants aux pannes, et plus particulièrement aux systèmes mettant en oeuvre des machines électriques qui fonctionnent avec un nombre de phases qui est supérieur ou égal à trois. Par un système d'entraînement électrique tolérant aux pannes on entend un système qui en cas de perte du courant circulant dans au moins une phase de la machine électrique permet de réagir de telle façon à la maintenir opérationnelle avec des performances similaires en terme de production de couple et de vitesse. Par une machine électrique on entend tant un moteur électrique qu'un générateur électrique.

La méthode de commande connue permet, en reconfigurant le système de commande, d'atténuer les ondulations de couple dans le cas de la perte d'une phase de la machine, par exemple à cause d'un circuit ouvert, ou de la défaillance de la partie de l'électronique de puissance qui s'y rapporte, par exemple un circuit ouvert d'un semi-conducteur, ou d'une des sources d'alimentation de la machine dans le cas de sources indépendantes pour chaque phase de la machine.

La machine électrique est agencée pour être alimentée par un convertisseur de puissance, lui-même alimenté par une source de tension continue qui peut être par exemple une batterie ou une tension de réseau redressée. Le convertisseur de puissance est piloté par un système de commande qui peut être de type numérique. Dans le cas d'une source de tension alternative, on peut mettre en oeuvre un cyclo-convertisseur. A noter que le système est conçu et dimensionné de façon à assurer le fonctionnement de l'ensemble convertisseur-machine à la puissance nécessaire à l'application et tenant compte du niveau de tension disponible à la source.

Avec un schéma de régulation sans compensation, en cas de perte du courant circulant dans une phase, la dégradation du fonctionnement à la suite du type de panne mentionné plus haut entraîne une réduction du couple fourni par la machine et une ondulation de ce couple à deux fois la fréquence électrique du courant qui circule dans la machine. Ceci entraîne des effets qui peuvent être gênants, voire inacceptables pour certaines applications à cause des vibrations engendrées, de l'usure rapide de certains organes de la machine, du bruit, des échauffements et des autres effets qui en découlent.

L'invention a pour but de réaliser une méthode de génération de n (n≥3) signaux de commande qui permet d'obtenir en cas de perte d'une ou de plusieurs phases une atténuation de l'ondulation de couple en évitant de mettre en oeuvre un processus de détection, de décision et de reconfiguration.

A cette fin une méthode suivant l'invention est caractérisée en ce que lors de chacun des cycles de calcul on détermine des résidus ($i_r(t)$) au départ des n valeurs de courant instantanées échantillonnées, lesquels résidus sont des combinaisons linéaires des courants échantillonnés, et qu'on détermine ensuite des termes de compensation à partir des résidus, et qu'on additionne lesdits termes de compensation aux signaux primaires de commande afin d'obtenir les n signaux de commande ($i_k^*, v_k^*$) pour déterminer les signaux de commutation des interrupteurs destinés à commander l'onduleur. Le résidu est une combinaison linéaire des n valeurs de courant instantanées échantillonnées lors de chaque cycle de calcul qui reflète si le courant circule de manière équilibrée dans l'ensemble des phases et permet de calculer des termes de compensation qui sont alors additionnés aux signaux primaires de commande afin de redistribuer les courants dans les phases encore opérationnelles de la machine pour ainsi réduire l'ondulation de couple. Dans le cas où le courant circule de manière équilibrée, le résidu est égal à zéro et les signaux de commande primaires sont appliqués avec un terme de compensation égal à zéro à l'onduleur. Dans le cas où le courant ne circule pas de manière équilibrée, le résidu ne sera pas égal à zéro. Comme les résidus et les termes de compensation sont déterminés dans chaque cycle de calcul, il n'y a aucune détection de défaut en tant que telle, reconfiguration de la structure du système de régulation ni changement des valeurs des paramètres de régulation.

Ainsi le fonctionnement de la machine est pour ainsi dire corrigé en permanence et le risque d'une ondulation du couple est significativement réduit. Selon le générateur de consignes primaires utilisé, ces termes de compensation peuvent être soit des tensions, soit des courants.

Une première forme de réalisation préférentielle d'une méthode suivant l'invention est caractérisée en ce que pour une machine à trois phases (n=3) à neutre connecté ou phases indépendantes, le résidu $i_r(t)$ est déterminé par :

$$i_r(t) = \frac{i_{m1}(t) + i_{m2}(t) + i_{m3}(t)}{3}$$

où $i_{mk}(t)$ ($1 \leq k \leq 3$) est la valeur instantanée échantillonnée du courant correspondant à la phase k. Dans un tel type de machine le résidu est le tiers de la somme des courants mesurés dans les trois phases.

Une deuxième forme de réalisation préférentielle d'une méthode suivant l'invention est caractérisée en ce que pour une machine à quatre phases (n=4) à neutre isolé, le résidu est déterminé par :

$$i_r(t) = \frac{i_{m1}(t) - i_{m2}(t) + i_{m3}(t) - i_{m4}(t)}{4}$$

où $i_{mk}(t)$ ($1 \leq k \leq 4$) est la valeur instantanée échantillonnée du courant correspondant à la phase k. L'avantage d'une machine à 4 phases à neutre isolé par rapport à une machine à 3 phases est qu'à puissance égale de la machine et tension d'alimentation égale, le courant de phase est plus faible.

Une troisième forme de réalisation préférentielle d'une méthode suivant l'invention est caractérisée en ce que pour une machine à quatre phases (n=4) à neutre connecté ou phases indépendantes, deux résidus sont déterminés par :

$$\begin{cases} i_{r1}(t) = \dfrac{i_{m1}(t) + i_{m3}(t)}{2} \\ i_{r2}(t) = \dfrac{i_{m2}(t) + i_{m4}(t)}{2} \end{cases}$$

où $i_{mk}(t)$ ($1 \leq k \leq 4$) est la valeur instantanée échantillonnée du courant correspondant à la phase k. Dans ce type de machine les résidus $i_{r1}(t)$ et $i_{r2}(t)$ sont orthogonaux.

Une quatrième forme de réalisation préférentielle d'une méthode suivant l'invention est caractérisée en ce que les résidus $i_{r\alpha}(t)$ et $i_{r\beta}(t)$ pour une machine à neutre isolé sont déterminés par:

$$\begin{cases} i_{r\alpha}(t) = \dfrac{2}{n} \displaystyle\sum_{k=1}^{n} \cos\frac{4\pi(k-1)}{n} \cdot i_{mk}(t) \\ i_{r\beta}(t) = \dfrac{2}{n} \displaystyle\sum_{k=1}^{n} \sin\frac{4\pi(k-1)}{n} \cdot i_{mk}(t) \end{cases}$$

où les résidus d'indice $\alpha$ et $\beta$ sont des signaux orthogonaux et où n est le nombre de phases de la machine (n>4), $i_{mk}(t)$ étant la valeur instantanée échantillonnée du courant correspondant à la phase k. Cette formule est applicable aux machines à neutre isolé et dont le nombre de phases est supérieur à quatre.

Une cinquième forme de réalisation préférentielle d'une méthode suivant l'invention est caractérisée en ce que pour une machine à trois phases (n=3) à neutre connecté ou phases indépendantes, respectivement pour une machine à quatre phases (n=4) à neutre isolé, les signaux de commande de tension électrique pour chacune des phases ($1 \leq k \leq n$) sont déterminés par:

$$v_k^*(t) = v_k(t) + R i_r(t) + L\frac{d i_r(t)}{dt}$$

où

- $v_k(t)$ est le signal de commande de tension électrique primaire produit par le régulateur de couple pour la phase k,
- R la résistance d'une phase de la machine et
- L l'inductance d'une phase de la machine.

Les termes de compensation sont ainsi déterminés en fonction de la résistance et de l'inductance de la machine.

Une sixième forme de réalisation préférentielle d'une méthode suivant l'invention est caractérisée ce que pour une machine à quatre phases (n=4) à neutre connecté ou phases indépendantes, les signaux de commande de tension électrique pour chacune des phases (1≤k≤n) sont déterminés par:

$$v_k^*(t) = v_k(t) + Ri_{rk}(t) + L\frac{di_{rk}(t)}{dt}$$

où

- $v_k(t)$ est le signal de commande de tension électrique primaire produite par le générateur de consigne pour la phase k,
- R la résistance d'une phase de la machine et
- L l'inductance d'une phase de la machine.

Les termes de compensation sont ainsi déterminés en fonction de la résistance et de l'inductance de la machine.

Une septième forme de réalisation préférentielle d'une méthode suivant l'invention est caractérisée en ce que les résidus sont déterminés par :

$$\begin{pmatrix} i_{r1}(t) \\ i_{r2}(t) \\ i_{r3}(t) \\ \dots \\ i_{rn}(t) \end{pmatrix} = \mu_{n,c} \begin{pmatrix} 1 & -c_2 & -c_3 & \dots & -c_n \\ -c_n & 1 & -c_2 & \dots & -c_{n-1} \\ -c_{n-1} & -c_n & 1 & \dots & -c_{n-2} \\ \dots & \dots & \dots & \dots & \dots \\ -c_2 & -c_3 & \dots & \dots & 1 \end{pmatrix} \begin{pmatrix} i_{m1}(t) \\ i_{m2}(t) \\ i_{m3}(t) \\ \dots \\ i_{mn}(t) \end{pmatrix}$$

où

- $c_2$ à $c_n$ sont des coefficients correcteurs dépendant du nombre de phases et du type de connexion de la machine et
- $\mu_{n,c}$ est un coefficient de pondération dépendant du nombre de phases (n) et du type de connexion de la machine (c)

et les signaux de commande sont déterminés par :

$$\begin{pmatrix} v_1^*(t) \\ v_2^*(t) \\ v_3^*(t) \\ \dots \\ v_n^*(t) \end{pmatrix} = \begin{pmatrix} v_1(t) \\ v_2(t) \\ v_3(t) \\ \dots \\ v_n(t) \end{pmatrix} + R \begin{pmatrix} i_{r1}(t) \\ i_{r2}(t) \\ i_{r3}(t) \\ \dots \\ i_{rn}(t) \end{pmatrix} + L\frac{d}{dt} \begin{pmatrix} i_{r1}(t) \\ i_{r2}(t) \\ i_{r3}(t) \\ \dots \\ i_{rn}(t) \end{pmatrix}.$$

Cette forme de réalisation permet de calculer directement à l'aide d'un calcul matriciel les signaux de commande lorsque ceux-ci sont exprimés sous forme de signaux de commande de tension.

Une huitième forme de réalisation préférentielle d'une méthode suivant l'invention est caractérisée en ce que les résidus sont déterminés par :

$$\begin{pmatrix} i_{r1}(t) \\ i_{r2}(t) \\ i_{r3}(t) \\ ... \\ i_{rn}(t) \end{pmatrix} = \mu_{n,c} \begin{pmatrix} 1 & -c_2 & -c_3 & ... & -c_n \\ -c_n & 1 & -c_2 & ... & -c_{n-1} \\ -c_{n-1} & -c_n & 1 & ... & -c_{n-2} \\ ... & ... & ... & ... & ... \\ -c_2 & -c_3 & ... & ... & 1 \end{pmatrix} \begin{pmatrix} i_{m1}(t) \\ i_{m2}(t) \\ i_{m3}(t) \\ ... \\ i_{mn}(t) \end{pmatrix}$$

où

- $c_2$ à $c_n$ sont des coefficients correcteurs dépendant du nombre de phases et du type de connexion de la machine et
- $\mu_{n,c}$ est un coefficient de pondération dépendant du nombre de phases (n) et du type de connexion de la machine (c), et les signaux de commande sont déterminés par :

$$\begin{pmatrix} i_1^*(t) \\ i_2^*(t) \\ i_3^*(t) \\ ... \\ i_n^*(t) \end{pmatrix} = \begin{pmatrix} i_1(t) \\ i_2(t) \\ i_3(t) \\ ... \\ i_n(t) \end{pmatrix} + \begin{pmatrix} i_{r1}(t) \\ i_{r2}(t) \\ i_{r3}(t) \\ ... \\ i_{rn}(t) \end{pmatrix}$$

Cette forme de réalisation permet de calculer directement à l'aide d'un calcul matriciel les signaux de commande lorsque ceux-ci sont exprimés sous forme de signaux de commande de courant.

La présente invention sera maintenant décrite plus en détails à l'aide des dessins dans lesquels :

La figure 1a illustre un dispositif d'entraînement utilisant une machine triphasée à neutre isolé ;
La figure 1b illustre la doublure des interrupteurs de puissance ;
La figure 2 illustre un dispositif d'entraînement utilisant une machine triphasée à neutre connecté au point milieu de la batterie ;
La figure 3 illustre un dispositif d'entraînement utilisant une machine triphasée à neutre piloté par un bras d'onduleur;
Les figures 4 a et b illustrent un dispositif d'entraînement utilisant une machine triphasée à phases indépendantes pilotées par des ponts en H alimentés par des sources de tension indépendantes (à gauche) ou une source de tension commune (à droite) ;
La figure 5 illustre le diagramme des phases de courant de référence pour trois phases;
Les figures 6 a et b illustrent respectivement le diagramme des phases de courants mesurés en cas de perte de la phase 1 pour une machine à trois phases à neutre isolé, respectivement à phases indépendantes;
Les figures 7 a et b illustrent le comportement de la régulation de couple et de courant lors d'un défaut ;
La figure 8 illustre un exemple de structure d'un régulateur de courant avec les signaux de commande étant des signaux de tension;
Les figures 9 a et b illustrent le comportement de la régulation de couple lors d'un défaut avec un régulateur avec compensation selon l'invention ;
Le figure 10 illustre un exemple de structure d'un régulateur de courant avec les signaux de commande étant des signaux de courant; et

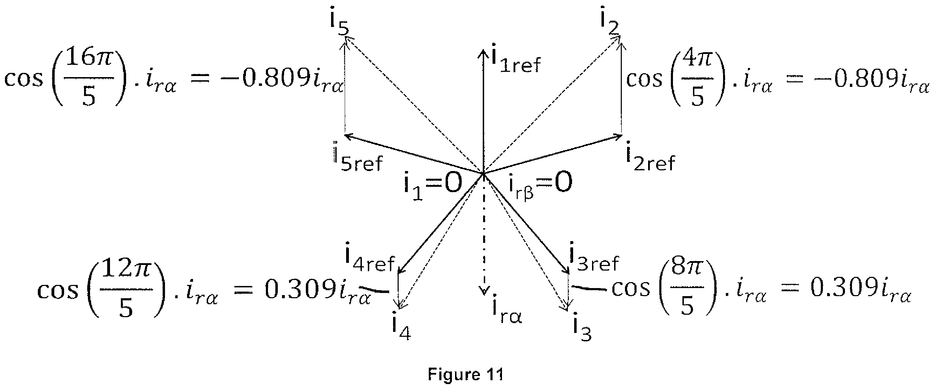

La figure 11 illustre le diagramme des phases de courants mesurés pour cinq phases en cas de perte de la phase 1 et de compensation suivant l'invention.

Dans les dessins une même référence à été attribuée à un même élément ou à un élément analogue.

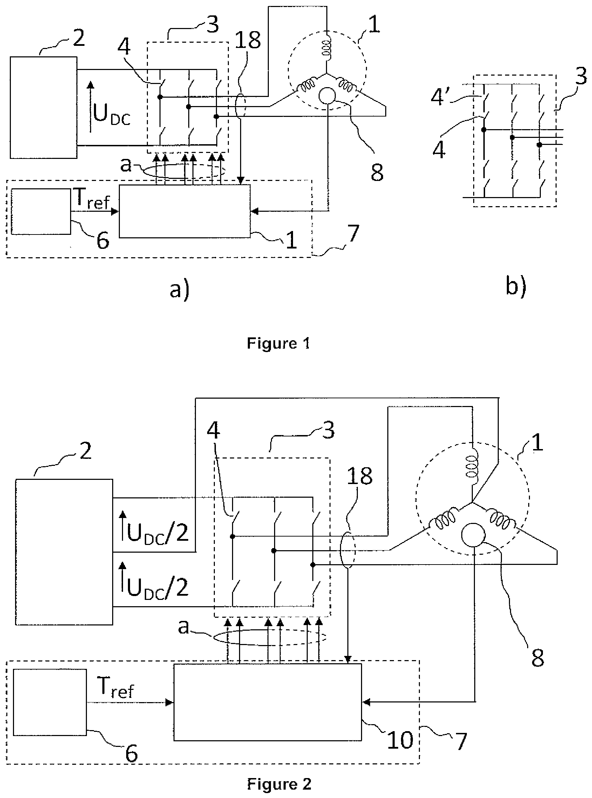

La figure 1 illustre un dispositif d'entraînement utilisant une machine triphasée (1) à neutre isolé et alimentée par une source de tension électrique continue (2) reliée à la machine par un onduleur (3) qui reçoit des signaux de commutation (a) pour commander les interrupteurs (4). Le branchement successif dans le temps des interrupteurs (4) par les signaux de commutation (a) permet de d'appliquer successivement la tension $U_{DC}$ aux différentes phases de la machine et ainsi de l'alimenter en tension pour y faire circuler les courants dans les différentes phases. Cette source de tension continue peut par exemple être une batterie ou une tension de réseau alternatif redressée. Les éléments (2) et (3) peuvent être combinés en un cyclo-convertisseur/convertisseur matriciel alimenté par un réseau alternatif. Le convertisseur est piloté par un système de commande (7) qui génère les signaux de commutation (a), qui sont déterminés à partir des tensions/courants requis pour produire le couple de référence prédéterminé (T$_{ref}$) et appliqués à l'onduleur (3) afin d'alimenter la machine électrique (1) de manière adéquate. Le système de commande (7) comporte un générateur de consigne de couple (6) relié à un régulateur de courant (10). En fonction du couple de référence prédéterminé à produire par la machine (1), ce générateur va déterminer une consigne de couple qui sera fournie au régulateur de courant (10). Le régulateur de courant reçoit également la mesure de n courants mesurés par les capteurs de courant (18) placés à la sortie de l'onduleur et une mesure de la position du rotor de la machine mesuré par le capteur de position angulaire (8). Sur base de la consigne de couple et des mesures de courant de phase et de la position du rotor, le régulateur de courant détermine les signaux de commutation (a).

Dans le cas d'une machine triphasée à neutre connecté ou à phases indépendantes pilotées par des ponts en H, comme illustré aux figures 2, 3 et 4 la perte d'une phase en circuit ouvert mène à une ondulation de couple d'une amplitude de 50% par rapport au couple nominal.

Dans le cas d'une machine à quatre phases, la perte d'une phase mène à une ondulation de couple d'une amplitude de 33% par rapport au couple nominal.

Plus généralement, pour une machine à n phases (n≥3), la perte d'une phase mène à une ondulation de couple d'une amplitude de 1/(n-1) par rapport au couple nominal.

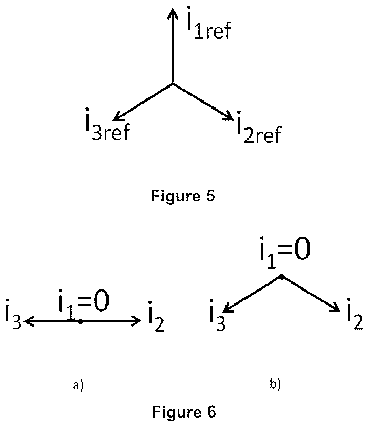

La figure 5 illustre le diagramme des phases de courant de référence pour une machine à trois phases. On voit dans cette figure que la somme vectorielle de ces courants est égale à zéro. La figure 6.a illustre le diagramme des phases de courants mesurés en cas de perte de la phase 1 pour une machine à trois phases à neutre isolé. La perte d'une phase en circuit ouvert entraîne pour cette machine triphasée 1 à neutre isolé la perte du contrôle de la machine. En effet, les courants des deux phases restantes étant opposés l'un à l'autre, on obtient un couple qui s'annule pour certaines positions du rotor et donc un démarrage impossible dans ces positions particulières. Il en va de même lors de la défaillance en court-circuit d'un semi-conducteur du pont de puissance. A noter que cette situation peut être évitée en doublant les interrupteurs de puissance 4 et 4' comme illustré à la figure 1b.

En doublant les interrupteurs de puissance, lorsqu'un interrupteur reste fermé, on arrive à ce que la phase liée à cet interrupteur reste opérationnelle sans que le fonctionnement de la machine ne soit perturbé. La figure 6.b illustre le diagramme des phases de courants mesurés en cas de perte de la phase 1 pour une machine à trois phases à neutre connecté. L'ondulation de couple en cas de perte de la phase 1 est de 50% par rapport au couple nominal.

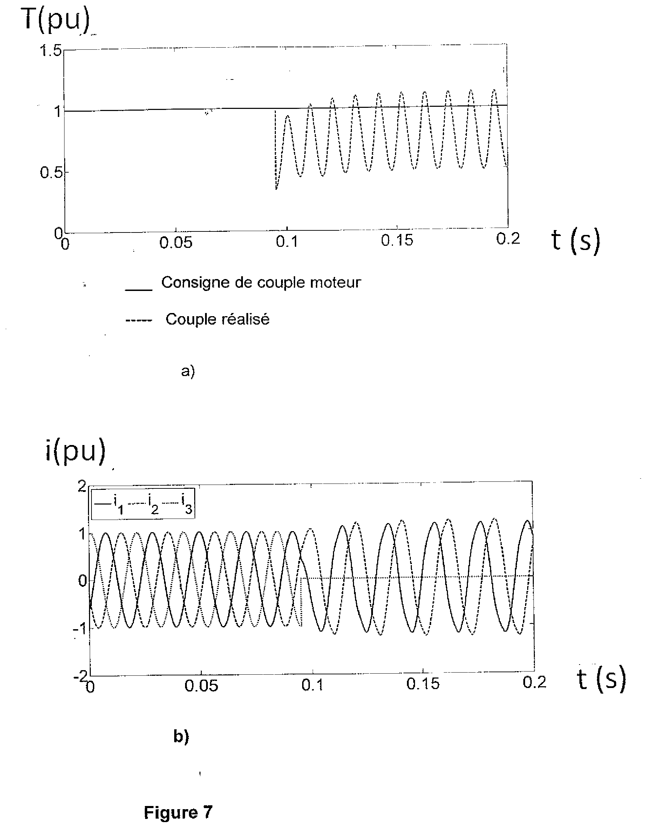

La figure 7a illustre un exemple d'un couple (T) produit par la machine triphasée à neutre connecté en fonction du temps (t) en cas de non compensation de la perte d'une phase. En supposant que la consigne du couple soit égale à 1 on constate que la perte d'une phase à 0,095 secondes entraîne que le couple va onduler entre environ 1,1 et 0,5. Comme l'illustre la figure 7b, qui illustre le courant i$_k$(t) circulant dans les trois phases de la machine en fonction du temps, le fait que le courant arrête de circuler dans la phase k=1 entraîne que le courant dans les deux autres phases augmente en amplitude et subit un décalage de phase.

Une solution envisagée serait d'augmenter le nombre de phases dans le but de réduire l'amplitude de l'ondulation de couple en cas de défaut. Toutefois ceci est une solution coûteuse, car elle impose l'augmentation du nombre de semi-conducteurs de puissance et de commandes rapprochées, l'augmentation du nombre de capteurs, le besoin d'un calculateur plus puissant, une connectique plus complexe, et autres.

Par ailleurs, lors de la perte d'une phase, le besoin en tension d'alimentation nécessaire pour atteindre le point de fonctionnement correspondant à la puissance moyenne nécessaire à l'application augmente. De plus, dans le cas d'une machine à neutre isolé associée à une régulation sans compensation, le potentiel du neutre oscille à la fréquence électrique des courants circulant dans les phases de la machine, ce qui impose de prendre une marge supplémentaire sur la tension d'alimentation nécessaire pour obtenir le couple.

Il est donc intéressant d'introduire une compensation permettant d'annuler les effets indésirables de la panne et en particulier l'ondulation de couple.

L'art antérieur enseigne une compensation permettant d'annuler l'ondulation du couple dans le cas d'un défaut en circuit ouvert au niveau de la machine ou de l'onduleur en utilisant un système de détection de panne. Cette compensation peut être obtenue en modifiant l'amplitude et la phase des courants des phases encore opérationnelles de la machine, ceci en introduisant des termes correctifs. Ces termes reconstruisent la composante de couple perdue à la suite du défaut.

Il est connu de déterminer des termes correctifs, en particulier des termes correctifs périodiques, qui sont en phase ou en opposition de phase avec le courant nominal de la phase perdue et dont l'amplitude est modulée par des coefficients, par exemple ceux repris dans les tables 1 et 2 mentionnés ci-dessous. Deux cas sont à distinguer :

- le premier est la machine à neutre isolé pour laquelle la somme des courants des phases de la machine est nulle tant avant qu'après le défaut;
- le deuxième est la machine à neutre connecté où le courant de neutre est nul en fonctionnement normal et pour laquelle un courant peut s'écouler par le neutre en cas de défaut ou la machine dont les phases sont alimentées de manière indépendante.

Un exemple de calcul des coefficients correctifs est donné dans l'article de François Baudart, Bruno Dehez, Ernest Matagne, Dan Telteu-Nedelcu, Paul Alexandre et Francis Labrique intitulé « Torque Control Strategy of Polyphase Permanent-Magnet Synchronous Machines With Minimal Controller Reconfiguration Under Open-Circuit Fault of One Phase » publié dans la revue IEEE transaction on Industrial Electronics, vol. 59, n°6, Juin 2012, pages 2632 à 2644. La mise en oeuvre des coefficients correctifs s'effectue comme suit pour une machine synchrone à force contre électromotrice sinusoïdale où en fonctionnement normal les courants ont la forme:

$$i_k(t) = I\sqrt{2}\cos\left(\omega_e t - (k-1)\frac{2\pi}{n}\right)$$

où

- $i_k(t)$: valeur instantanée du courant correspondant à la phase k, ($1 \leq k \leq n$)
- $I$ : amplitude du courant (valeur efficace),
- $n$ : nombre de phases,
- $\omega_e$ : fréquence électrique du courant,
- $t$ : temps.

Lors d'un défaut en circuit ouvert de par exemple la phase k=1, celle-ci ne produit plus de couple, ce qui cause une ondulation du couple global d'amplitude 1/(n-1) et de pulsation $2.\omega_e$. Cette ondulation peut être compensée en injectant les termes correctifs suivants aux autres phases :

$$\begin{cases} i_{1,d}(t) = 0 \\ i_{k,d}(t) = i_k(t) + c_k.i_1(t) \end{cases}$$

où

- $i_{1,d}(t)$ est le courant après défaut de la phase k=1,
- $i_{k,d}(t)$ est le courant de la phase k≠1 corrigé pour compenser la perte de la phase 1,
- $i_k(t)$ est le courant de la phase k≠1 qui aurait été présent en l'absence de défaut,
- $c_k$ est le coefficient correcteur associé à la phase k,
- $i_1(t)$ est le courant de la phase 1 qui aurait été présent en l'absence de défaut.

Les coefficients $c_k$ valent dans le cas neutre isolé et ouverture de la phase 1 (figure 1):

Table 1

| Coefficient | Nombre de phase n | | | |
|---|---|---|---|---|
| | 3 | 4 | 5 | 6 |
| c2 | / | 1 | 0.809 | 0.667 |
| c3 | / | -1 | -0.309 | 0 |
| c4 | | 1 | -0.309 | -0.333 |
| c5 | | | 0.809 | 0 |
| c6 | | | | 0.667 |

Dans le cas neutre connecté ou phases indépendantes et ouverture de la phase 1 (figures 2, 3 et 4), les coefficients $c_k$ valent :

Table 2

| Coefficient | Nombre de phase n | | | |
|---|---|---|---|---|
| | 3 | 4 | 5 | 6 |
| c2 | -1 | 0 | 0.206 | 0.25 |
| c3 | -1 | -1 | -0.539 | -0.25 |
| c4 | | 0 | -0.539 | -0.5 |
| c5 | | | 0.206 | -0.25 |
| c6 | | | | 0.25 |

L'exemple des coefficients repris dans les tables ci-dessus minimisent les pertes Joule mais il est possible de déterminer d'autres coefficients qui optimisent d'autres critères comme par exemple l'amplitude maximale des courants dans les phases de la machine.

Dans l'approche proposée par le brevet US 6,949,908 ainsi que dans l'article précité, afin d'appliquer ces termes correctifs, les pannes doivent être détectées et identifiées par un système de surveillance des signaux provenant de différents capteurs et, le cas échéant, une unité prend la décision de modifier ou de reconfigurer le dispositif de commande pour injecter les termes de correction adéquats en fonction de la phase en panne et ainsi de réduire l'ondulation du couple afin de réduire ses effets gênants.

Malheureusement, un tel système de surveillance et de détection présente un temps de réaction trop lent et un délai trop important entre la détection et la régulation et la compensation de la perte de puissance. La conception, et surtout la validation, d'un système à plusieurs états comportant des fonctions de détection et de décision qui sont lents et posent donc de réelles difficultés, en particulier si l'actionneur ou l'entraînement fonctionne dans des conditions extrêmes et pendant des durées importantes. Il faut en effet d'abord détecter laquelle des phases est défaillante et ensuite déterminer pour chacune des phases encore opérationnelles les courants $i_{kd}(t)$. Ceci fait que cette méthode est complexe et pourrait réduire la fiabilité du système.

La méthode proposée suivant la présente invention permet, par une intervention appropriée dans le système de commande, d'obtenir de façon plus efficace et plus fiable une atténuation de l'ondulation du couple sans système de détection de panne ni de reconfiguration.

Cette intervention consiste à déterminer dans chaque cycle de calcul des termes de compensation (courants ou tensions suivant le type de structure de régulation) à partir des courants instantanés mesurés dans les phases de la machine et à les ajouter aux signaux de commande primaires déterminés par le générateur de consigne pour ainsi fournir à l'onduleur des signaux de commande destinés à piloter l'alimentation de la machine et ainsi réduire l'ondulation de couple en cas de perte d'au moins une phase

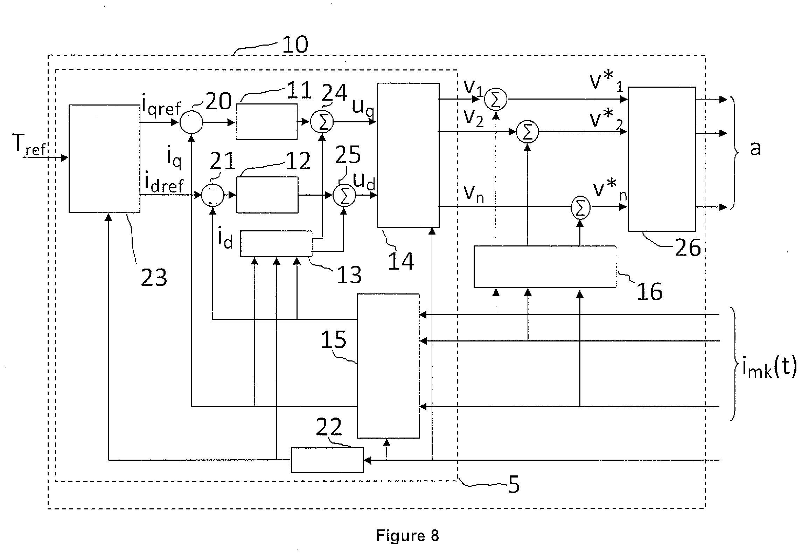

La figure 8 illustre un exemple d'un régulateur de courant (10) permettant de réguler le courant fourni à la machine (non illustrée) à n phases en appliquant la méthode de génération de n signaux de commande $v^*_k(t)$ ($1 \leq k \leq n$) suivant l'invention. Le régulateur de courant illustré à la figure 8 produit des signaux primaires de commande $v_k(t)$ qui sont des signaux de tension électrique. Le régulateur de courant comporte un premier bloc de calcul (15) qui reçoit à son entrée les n signaux indiquant la valeur instantanée du courant circulant dans les différentes phases et venant des capteurs (18) (non repris dans la figure 8) ainsi que la position angulaire du rotor mesurée par le capteur (8) (non repris dans la figure 8). Le premier bloc de calcul (15) calcule sur base des signaux reçus en appliquant une transformation de Concordia/Park (cf. Werner LEONHARD, « Control of Electrical Drives », Springer 2001, ISBN 3-540-41820-2), le courant d'axe q désigné $i_q$ (axe q en quadrature avec le flux du rotor) qui est proportionnel au couple et le courant d'axe d désigné $i_d$ (axe direct : aligné avec le flux du rotor) qui ne produit pas de couple et qui est en phase avec le flux du rotor. La consigne de courant id est donc nulle afin de minimiser les pertes Joule sauf en cas de défluxage. Les courants $i_q$ et $i_d$ sont respectivement fournis à un premier (20) et un deuxième (21) comparateur.

Le régulateur de courant (10) comporte également un dérivateur (22) qui reçoit à son entrée le signal venant du capteur de position (8) du rotor. A noter que ce dérivateur pourrait être évité si on utilise un capteur de vitesse. Ce dérivateur produit un signal de vitesse de rotation du rotor à partir de la position mesurée du rotor. Une sortie du dérivateur est reliée à un deuxième bloc de calcul (13) lequel est également relié à la sortie du premier bloc de calcul (15). Le deuxième bloc de calcul (13) calcule la force contre-électromotrice de la machine ainsi que les termes de découplage d'axe d et q. La sortie du dérivateur (22) est également reliée au bloc de conditionnement de consigne de couple (23) afin de déterminer la consigne de courant $i_{dref}$ et $i_{qref}$ (avec $i_{dref}$ négatif dans le cas ou la machine serait défluxée).

Un premier (11) et un deuxième (12) correcteur de courant sont respectivement reliés à la sortie des comparateurs (20) et (21). Ces correcteurs de courant reçoivent chacun à leur entrée un signal d'erreur produit par les comparateurs et indiquent la différence entre les courants $i_{qref}$ et $i_{dref}$ et les valeurs déterminées $i_q$ et $i_d$ par le premier bloc de calcul (15).

Les sorties des régulateurs (11) et (12) sont les signaux de tension auxquelles on additionne à l'aide des additionneurs (24) et (25) les termes de découplage ainsi que la force contre-électromotrice calculés par le deuxième bloc de calcul (13). La sortie de chaque additionneur (24) et (25) représente les tensions $u_q$ et $u_d$ dans le repère de Park. Ces tensions $u_q$ et $u_d$ sont transformées par un troisième bloc de calcul (14) qui fait la conversion inverse de celle produite par le premier bloc de calcul en transformant les tensions $u_d$ et $u_q$ en un ensemble équilibré de n tensions $v_k(t)$ alternatives et désignées tensions primaires. Le troisième bloc de calcul (14) applique aux signaux de tension $u_d$ et $u_q$ une transformation de Park inverse suivie d'une transformation de Concordia inverse.

Le détail des transformations du schéma classique est notamment repris dans le document suivant : F. Baudart, F. Labrique, E. Matagne, D. Telteu, P. Alexandre "Calcul d'une matrice de Concordia étendue pour des machines synchrones polyphasées segmentées en marche normale et en marche dégradée", publiée dans les Proceedings de la conférence Electronique du Futur 2009, EF 2009, Compiègne, France, 6 pages, 24-25 septembre 2009.

Les capteurs de courants (18) (non repris dans la figure 8) sont placés sur les n phases de la machine et mesurent les valeurs instantanées des courants circulant dans chacune desdites n phases de la machine. Ces valeurs instantanées des courants sont échantillonnées et ensuite fournies à un quatrième bloc de calcul (16) qui sur base des échantillonnes de courants reçus détermine des résidus. Par résidu on entend un signal de courant obtenu par une combinaison linéaire des valeurs instantanées des courants échantillonnés. La valeur de cette combinaison est nulle dans le cas d'un système de courants équilibré, soit en l'absence de défaut. Le résidu est un signal de courant ayant une amplitude vectorielle similaire à celle du courant $i_k(t)$ qui aurait dû circuler dans la phase k défaillante, mais de signe opposé à celui du courant $i_k(t)$. A partir des résidus précédemment déterminés le bloc (16) calcule des termes de compensation qui sont fournis à sa sortie. Ces termes de compensation sont chaque fois additionnés aux signaux de tension primaires $v_k(t)$ produits par le bloc (14). Les signaux de commande $v^*_k(t)$ ainsi obtenus sont fournis au cinquième bloc de calcul (26) qui les convertit en signaux de commutation pour les interrupteurs (4) (non-repris sur cette figure).

En l'absence de défaut, les résidus sont nuls et donc la rétroaction appliquée est nulle. Par contre en cas de défaut, les capteurs (18) vont mesurer n courants constituant un système déséquilibré dont les résidus déterminés par le bloc (16) sont non nuls. Ces résidus permettent de déterminer des termes de tension de compensation à ajouter aux sorties du troisième bloc de calcul (14) afin de réduire l'ondulation de couple quelque soit la phase en défaut.

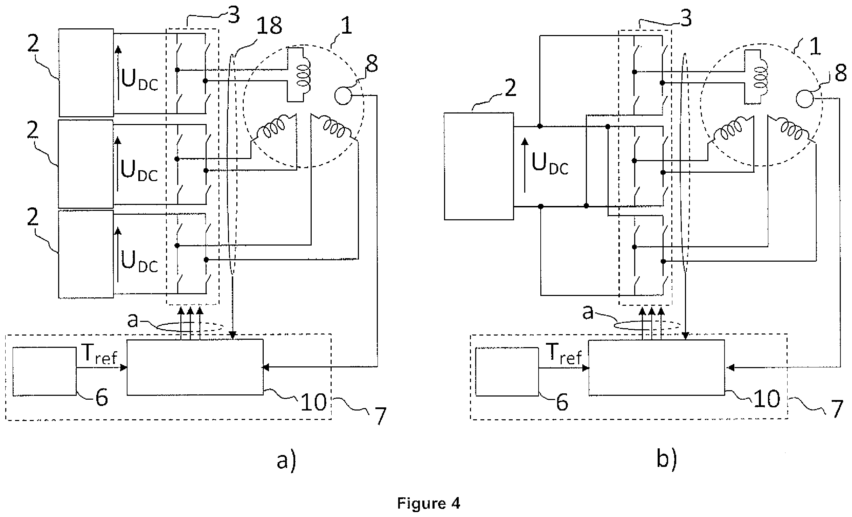

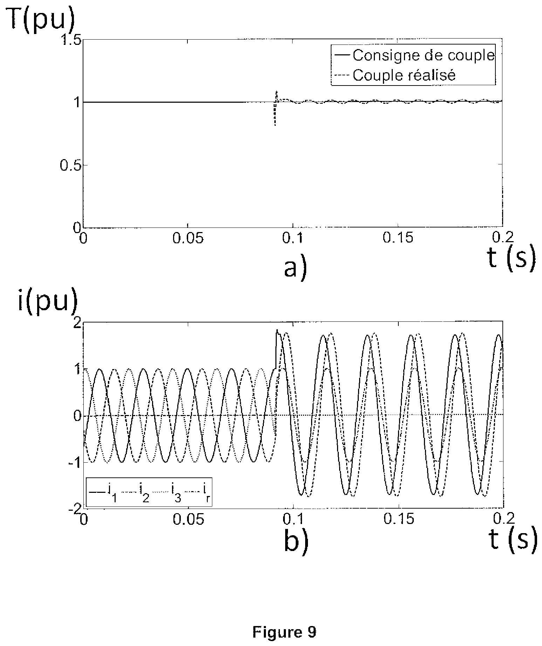

La figure 9.a illustre le comportement du couple lors de la perte d'une phase dans le cas d'une régulation selon l'invention avec compensation (figure 8) d'une machine triphasée pilotée par des ponts en H (figure 4). Comme on peut le constater, lors de la perte de la phase 3 (circuit ouvert), après un bref transitoire, le couple moyen est rétabli à presque 100% avec une ondulation de couple réduite à une valeur négligeable. Le signal de résidu ir(t) valant le tiers de la somme des 3 courants de phase est représenté avec ceux-ci sur la figure 9b. On constate bien que celui-ci est nul avant l'apparition du défaut et est l'opposé du courant qui aurait circulé dans la phase 3 en l'absence de défaut (dans ce cas de régime établi). On constatera également dans la figure 9b que dans les deux autres phases le courant a augmenté et sa phase a changé pour ainsi compenser la perte de la phase 3 et obtenir le couple nécessaire.

A noter que pour se prémunir des défauts de type court-circuit des semi-conducteurs et dès lors se ramener systématiquement à des défauts de type circuit ouvert, il est possible de choisir une topologie à interrupteurs de puissance doublés, comme illustré en 1b.

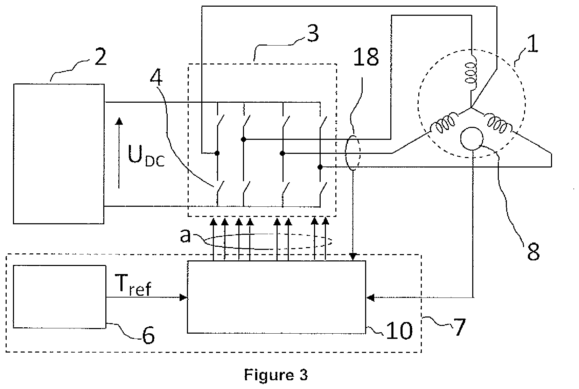

La détermination du (des) résidu(s) dépend du nombre de phases de la machine et de la connexion de la machine : neutre isolé (figure 1), neutre connecté (figure 2 et 3) ou phases indépendantes (figure 4).

Pour une machine à 3 phases (n=3) à neutre connecté ou phases indépendantes, un seul résidu $i_r(t)$ est suffisant et se détermine par :

$$i_r(t) = \frac{i_{m1}(t) + i_{m2}(t) + i_{m3}(t)}{3}$$

Dans le cas d'une machine à 4 phases (n=4) à neutre isolé, un seul résidu $i_r(t)$ est suffisant et se détermine par :

$$i_r(t) = \frac{i_{m1}(t) - i_{m2}(t) + i_{m3}(t) - i_{m4}(t)}{4}$$

Par contre dans le cas d'une machine à 4 phases à neutre connecté ou phases indépendantes, deux résidus doivent être déterminés par :

$$\begin{cases} i_{r1}(t) = \dfrac{i_{m1}(t)+i_{m3}(t)}{2} \\[2mm] i_{r2}(t) = \dfrac{i_{m2}(t)+i_{m4}(t)}{2} \end{cases}$$

A noter que selon la phase en défaut, un des deux résidus reste nul : par exemple, dans le cas où suite à un défaut, le courant $i_{m1}(t)$ disparaît, le résidu $i_{r2}(t)$ reste nul, car le courant $i_{m1}(t)$ n'intervient pas dans le calcul du résidu $i_{r2}(t)$. La mise en oeuvre de deux résidus permet de compenser le système quelque soit la phase en défaut sans utiliser d'algorithme de détection.

Dans le cas plus général d'une machine d'un nombre de phase supérieur à 4 (n>4), la détermination des résidus dénommés $i_{r\alpha}(t)$ et $i_{r\beta}(t)$ s'établit de la manière suivante, où les résidus d'indice $\alpha$ et $\beta$ sont des signaux orthogonaux :

$$\begin{cases} i_{r\alpha}(t) = \dfrac{2}{n}\displaystyle\sum_{k=1}^{n} \cos\dfrac{4\pi(k-1)}{n} \cdot i_{mk}(t) \\[4mm] i_{r\beta}(t) = \dfrac{2}{n}\displaystyle\sum_{k=1}^{n} \sin\dfrac{4\pi(k-1)}{n} \cdot i_{mk}(t) \end{cases}$$

où

- n est le nombre de phases de la machine (n>4),
- $i_{mk}(t)$ est la valeur instantanée mesurée du courant correspondant à la phase k.

Pour déterminer à partir des résidus les termes de compensation des signaux de commande, la méthode se greffe sur le schéma classique d'asservissement des courants/flux de la machine qui est éventuellement imbriquée dans une boucle de vitesse et/ou une boucle de position ou, de manière plus générale qui est intégrée dans une rétroaction d'état. Ainsi dans la forme de réalisation illustrée à la figure 8 les termes de compensation sont appliqués en permanence aux signaux primaires de tension $v_k$ produits par le troisième bloc de calcul (14). Ces termes de compensation sont nuls et donc sans effet en l'absence de défaut, car les résidus sont nuls. De ce fait, une détection de défaut phase par phase et une modification de l'algorithme d'asservissement n'est pas nécessaire, et la tension primaire est fournie avec des termes de compensation égaux à 0 à la machine. Cette action permanente permet de réagir plus rapidement et donc plus efficacement en cas de défaut.

D'autres manières de réaliser cette régulation de courant comme le Direct Torque Control sont équivalentes et peuvent également être utilisées.

Pour l'exemple de la commande en tension d'une machine à 3 phases (n=3) à neutre connecté ou phases indépendantes, les signaux de commande compensés sont

$$v_k^*(t) = v_k(t) + Ri_r + L\frac{di_r}{dt}$$

où

- $v_k(t)$ est le signal de de commande primaire en tension déterminée par le bloc de calcul (14),
- $v_k^*(t)$ est la tension compensée à appliquer à la phase k de la machine,
- R est la résistance d'une phase de la machine,
- L est l'inductance d'une phase de la machine.

Les calculs des termes correctifs $Ri_r(t) + L\frac{di_r(t)}{dt}$ peuvent être obtenus soit par un filtre passe-haut soit par un observateur.

A noter qu'en l'absence de défaut les résidus sont nuls, car $i_r(t)$ est nul, de sorte que $v_k^*(t) = v_k(t)$ ce qui correspond au fonctionnement normal.

Pour l'exemple de la commande en tension de la machine à 4 phases (n=4) à neutre isolé, les signaux de commande compensés sont déterminés en utilisant les mêmes notations:

$$v_k^*(t) = v_k(t) + Ri_r + L\frac{di_r}{dt}$$

Pour l'exemple de la commande en tension de la machine à 4 phases (n=4) à neutre connecté ou phases indépendantes, les signaux de commande compensés sont :

$$v_1^*(t) = v_1(t) + Ri_{r1} + L\frac{di_{r1}}{dt}$$

$$v_2^*(t) = v_2(t) + Ri_{r2} + L\frac{di_{r2}}{dt}$$

$$v_3^*(t) = v_3(t) + Ri_{r1} + L\frac{di_{r1}}{dt}$$

$$v_4^*(t) = v_4(t) + Ri_{r2} + L\frac{di_{r2}}{dt}$$

Les calculs des termes correctifs $Ri_{r1,2}(t) + L\frac{di_{r1,2}(t)}{dt}$ peuvent être obtenus soit par un filtre passe-haut soit par un observateur.

Dans le cas plus général d'une machine d'un nombre de phase supérieur à 4 (n>4) et neutre isolé, les signaux de commandes compensés sont :

$$v_k^*(t) = v_k(t) + \cos\left((k-1)\frac{4\pi}{n}\right)\left(Ri_{r\alpha}(t) + L\frac{di_{r\alpha}(t)}{dt}\right)$$

$$+ \sin\left((k-1)\frac{4\pi}{n}\right)\left(Ri_{r\beta}(t) + L\frac{di_{r\beta}(t)}{dt}\right)$$

Les calculs des termes correctifs peuvent être obtenus soit par un filtre passe-haut soit par un observateur.

Le régulateur de courant (10) est basé sur l'utilisation du dispositif numérique qui peut être par exemple un système à microprocesseur ou tout autre type de calculateur, dispositif dont le périmètre est indiqué à la figure 8. Ce dispositif assure numériquement l'ensemble des fonctions indiquées sur le schéma-bloc et éventuellement d'autre fonctions liées à l'asservissement du système d'actionnement ou d'entraînement qui ne sont pas représentées ici comme par exemple la régulation de vitesse, la régulation de position, la communication et l'interface avec d'autres processus.

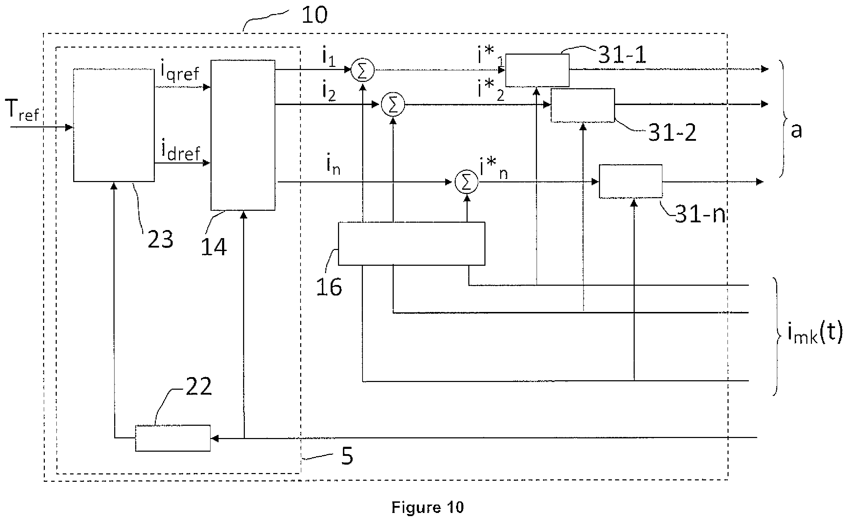

Une variante de l'utilisation de la méthode qui fait l'objet de l'invention est illustré à la figure 10 pour une machine à n phases. La régulation de couple est ici basée sur la génération de n courants de consigne primaires $i_1(t)$ à $i_n(t)$ qui sont directement fournis à des régulateurs à hystérésis 31-1, 31-2,...31-n. Dans cette forme de réalisation le bloc (14) détermine directement les signaux primaires de commande à partir des courants $i_{qref}$ et $i_{dref}$. Dans ce cas, la détermination de résidus se fait de la même façon que décrit ci-dessus. Les termes de compensation en courant sont donnés par :

- dans le cas d'une machine à 3 phases à phases indépendantes ou neutre connecté, le résidu est déterminé par le bloc (16) et sur base de

$$i_r(t) = \frac{i_{m1}(t) + i_{m2}(t) + i_{m3}(t)}{3}$$

et est directement ajouté aux courants de consigne primaires comme illustré à la figure 10.

- dans le cas d'une machine à 4 phases à neutre isolé, le résidu est également directement ajouté au courants de consigne primaires ;
- dans le cas d'une machine à 4 phases à phases indépendantes ou neutre connecté, le résidu $i_{r1}(t)$ est ajouté aux courants de consigne primaires des phases 1 et 3, le résidu $i_{r2}(t)$ est ajouté aux courants de consigne primaires des phases 2 et 4;
- dans le cas d'une machine n>4, les résidus $\alpha$, $\beta$ sont ajoutés aux n courants de consigne primaires selon la formule :

$$i_k^*(t) = i_k(t) + \cos\left((k-1)\frac{4\pi}{n}\right)i_{r\alpha}(t) + \sin\left((k-1)\frac{4\pi}{n}\right)i_{r\beta}(t)$$

Une autre variante de la méthode consiste à déterminer n résidus en utilisant les coefficients correctifs $c_k$ des tables 1 ou 2 suivant que l'on considère une machine à neutre isolé ou à phases indépendantes ou neutre connecté :

$$\begin{pmatrix} i_{r1}(t) \\ i_{r2}(t) \\ i_{r3}(t) \\ ... \\ i_{rn}(t) \end{pmatrix} = \mu_{n,c} \begin{pmatrix} 1 & -c_2 & -c_3 & ... & -c_n \\ -c_n & 1 & -c_2 & ... & -c_{n-1} \\ -c_{n-1} & -c_n & 1 & ... & -c_{n-2} \\ ... & ... & ... & ... & ... \\ -c_2 & -c_3 & ... & ... & 1 \end{pmatrix} \begin{pmatrix} i_{m1}(t) \\ i_{m2}(t) \\ i_{m3}(t) \\ ... \\ i_{mn}(t) \end{pmatrix}$$

où

- $c_k$ est le coefficient correcteur associé à la phase k, comme par exemple ceux des tables 1 et 2
- $\mu_{n,c}$ est un coefficient de pondération qui dépend du nombre de phase n et du type de connexion (c) de la machine :

  • $\mu_{n,c} = \frac{n-3}{n}$ dans le cas d'une machine à neutre isolé

  • $\mu_{n,c} = \frac{n-2}{n}$ dans le cas d'une machine à phases indépendantes ou neutre connecté

Les signaux de commande $(v_k^*, i_k^*)$ s'obtiennent ensuite respectivement de la manière suivante, pour une commande en tension :

$$\begin{pmatrix} v_1^*(t) \\ v_2^*(t) \\ v_3^*(t) \\ ... \\ v_n^*(t) \end{pmatrix} = \begin{pmatrix} v_1(t) \\ v_2(t) \\ v_3(t) \\ ... \\ v_n(t) \end{pmatrix} + R \begin{pmatrix} i_{r1}(t) \\ i_{r2}(t) \\ i_{r3}(t) \\ ... \\ i_{rn}(t) \end{pmatrix} + L\frac{d}{dt} \begin{pmatrix} i_{r1}(t) \\ i_{r2}(t) \\ i_{r3}(t) \\ ... \\ i_{rn}(t) \end{pmatrix}$$

et pour une commande en courant :

$$\begin{pmatrix} i_1^*(t) \\ i_2^*(t) \\ i_3^*(t) \\ ... \\ i_n^*(t) \end{pmatrix} = \begin{pmatrix} i_1(t) \\ i_2(t) \\ i_3(t) \\ ... \\ i_n(t) \end{pmatrix} + \begin{pmatrix} i_{r1}(t) \\ i_{r2}(t) \\ i_{r3}(t) \\ ... \\ i_{rn}(t) \end{pmatrix}$$

## Revendications

1. Méthode de génération de n, n≥3, signaux de commande $(i_k^*, v_k^*)$ utilisés pour déterminer les signaux (a) de commutation des interrupteurs (4) d'un onduleur (3) à n phases connecté à une machine électrique (1) opérant à n phases, lesquels signaux de commandes sont générés à partir de n signaux primaires de commande $(i_k, v_k)$ fournis et déterminés par un générateur de consignes (5) faisant partie d'un régulateur de courant (10) agencé pour obtenir un couple de référence prédéterminé, lesquels signaux de commutation sont appliqués à l'onduleur (3) afin de faire circuler n courants électriques dans la machine pour y produire le couple de référence prédéterminé, dans laquelle méthode on mesure à l'aide de capteurs dans chacune desdites n phases de la machine une valeur instantanée du courant circulant dans chacune des phases, et qu'on échantillonne lors de chacun des cycles de calcul ces valeurs instantanées des n courants $(i_{mk}(t))$, **caractérisée en ce que** lors de chacun des cycles de calcul on détermine des résidus $(i_r(t))$ au départ des n valeurs de courant instantanées échantillonnées, lesquels résidus sont des combinaisons linéaires des courants échantillonnés, et qu'on détermine ensuite des termes de compensation à partir des résidus, et qu'on additionne lesdits termes de compensation aux signaux primaires de commande afin d'obtenir les n signaux de commande $(i_k^*, v_k^*)$ pour déterminer les signaux (a) de commutation des interrupteurs (4) destinés à commander l'onduleur.

2. Méthode suivant la revendication 1, **caractérisée en ce que** les n signaux de commande primaires $(v_k)$ fournis par le générateur de consigne, les n termes de compensation et les n signaux de commande $(v_k^*)$ sont des consignes de tension utilisées pour déterminer les signaux (a) de commutation des interrupteurs (4) de l'onduleur.

3. Méthode suivant la revendication 1, **caractérisée en ce que** les n signaux de commande primaires $(i_k)$ fournis par le générateur de consigne, les n termes de compensation et les n signaux de commande $(i_k^*)$ sont des consignes de courant utilisées pour déterminer les signaux (a) de commutation des interrupteurs (4) de l'onduleur.

4. Méthode suivant l'une des revendications 1 à 3, **caractérisée en ce que** pour une machine à trois phases à neutre connecté ou phases indépendantes, le résidu $i_r(t)$ est déterminé par :

$$i_r(t) = \frac{i_{m1}(t) + i_{m2}(t) + i_{m3}(t)}{3}$$

où $i_{mk}(t)$ (1≤k≤3) est la valeur instantanée échantillonnée du courant correspondant à la phase k.

5. Méthode suivant l'une des revendications 1 à 3, **caractérisée en ce que** pour une machine à quatre phases, à neutre connecté ou phases indépendantes, deux résidus sont déterminés par :

$$\begin{cases} i_{r1}(t) = \dfrac{i_{m1}(t) + i_{m3}(t)}{2} \\ i_{r2}(t) = \dfrac{i_{m2}(t) + i_{m4}(t)}{2} \end{cases}$$

où $i_{mk}(t)$ (1≤k≤4) est la valeur instantanée échantillonnée du courant correspondant à la phase k.

**6.** Méthode suivant l'une des revendications 1 à 3, **caractérisée en ce que** pour une machine à quatre phases à neutre isolé, le résidu est déterminé par :

$$i_r(t) = \frac{i_{m1}(t) - i_{m2}(t) + i_{m3}(t) - i_{m4}(t)}{4}$$

où $i_{mk}(t)$ ($1 \le k \le 4$) est la valeur instantanée échantillonnée du courant correspondant à la phase k.

**7.** Méthode suivant l'une des revendications 1 à 3, **caractérisée en ce que** les résidus $i_{r\alpha}(t)$ et $i_{r\beta}(t)$ pour une machine à neutre isolé dont le nombre de phases est supérieur à quatre, n>4, sont déterminés par:

$$\begin{cases} i_{r\alpha}(t) = \dfrac{2}{n} \displaystyle\sum_{k=1}^{n} \cos\frac{4\pi(k-1)}{n} \cdot i_{mk}(t) \\[3mm] i_{r\beta}(t) = \dfrac{2}{n} \displaystyle\sum_{k=1}^{n} \sin\frac{4\pi(k-1)}{n} \cdot i_{mk}(t) \end{cases}$$

où les résidus d'indice $\alpha$ et $\beta$ sont des signaux orthogonaux, $i_{mk}(t)$ étant la valeur instantanée échantillonnée du courant correspondant à la phase k.

**8.** Méthode suivant les revendications 2 et 4, respectivement 2 et 6, **caractérisée en ce que** pour une machine à trois phases à neutre connecté ou phases indépendantes, respectivement pour une machine à quatre phases à neutre isolé, les signaux de commande en tension électrique pour chacune des phases ($1 \le k \le n$) sont déterminés par:

$$v_k^*(t) = v_k(t) + Ri_r(t) + L\frac{di_r(t)}{dt}$$

où

- $v_k(t)$ est le signal de commande primaire en tension électrique produit par le régulateur de couple pour la phase k,
- R la résistance d'une phase de la machine et
- L l'inductance d'une phase de la machine.

**9.** Méthode suivant la revendication 2 et 5, **caractérisée en ce que** pour une machine à quatre phases à neutre connecté ou phases indépendantes, les signaux de tension électrique pour chacune des phases ($1 \le k \le n$) sont déterminés par:

$$v_1^*(t) = v_1(t) + Ri_{r1} + L\frac{di_{r1}}{dt}$$

$$v_2^*(t) = v_2(t) + Ri_{r2} + L\frac{di_{r2}}{dt}$$

$$v_3^*(t) = v_3(t) + Ri_{r1} + L\frac{di_{r1}}{dt}$$

$$v_4^*(t) = v_4(t) + Ri_{r2} + L\frac{di_{r2}}{dt}$$

où

- $v_k(t)$ est le signal de commande primaire en tension électrique produit par le régulateur de couple pour la phase k,
- R la résistance d'une phase de la machine et
- L l'inductance d'une phase de la machine.

**10.** Méthode suivant la revendication 2 et 7, **caractérisée en ce que** pour une machine à n phases, n>4, à neutre isolé, les signaux de commande pour chacune des phases (1≤k≤n) sont déterminés par:

$$v_k^*(t) = v_k(t) + \cos\left((k-1)\frac{4\pi}{n}\right)\left(Ri_{r\alpha}(t) + L\frac{di_{r\alpha}(t)}{dt}\right)$$

$$+ \sin\left((k-1)\frac{4\pi}{n}\right)\left(Ri_{r\beta}(t) + L\frac{di_{r\beta}(t)}{dt}\right)$$

où

- $v_k(t)$ est le signal de commande primaire en tension électrique produit par le régulateur de couple pour la phase k,
- R la résistance d'une phase de la machine et
- L l'inductance d'une phase de la machine.

**11.** Méthode suivant la revendication 2, **caractérisée en ce que** les résidus sont déterminés par :

$$\begin{pmatrix} i_{r1}(t) \\ i_{r2}(t) \\ i_{r3}(t) \\ ... \\ i_{rn}(t) \end{pmatrix} = \mu_{n,c} \begin{pmatrix} 1 & -c_2 & -c_3 & ... & -c_n \\ -c_n & 1 & -c_2 & ... & -c_{n-1} \\ -c_{n-1} & -c_n & 1 & ... & -c_{n-2} \\ ... & ... & ... & ... & ... \\ -c_2 & -c_3 & ... & ... & 1 \end{pmatrix} \begin{pmatrix} i_{m1}(t) \\ i_{m2}(t) \\ i_{m3}(t) \\ ... \\ i_{mn}(t) \end{pmatrix}$$

où

- $c_2$ à $c_n$ sont des coefficients correcteurs dépendant du nombre de phases et du type de connexion de la machine et
- $\mu_{n,c}$ est un coefficient de pondération dépendant du nombre de phases (n) et du type de connexion de la machine (c), et les signaux de commande sont déterminés par :

$$\begin{pmatrix} v_1^*(t) \\ v_2^*(t) \\ v_3^*(t) \\ ... \\ v_n^*(t) \end{pmatrix} = \begin{pmatrix} v_1(t) \\ v_2(t) \\ v_3(t) \\ ... \\ v_n(t) \end{pmatrix} + R \begin{pmatrix} i_{r1}(t) \\ i_{r2}(t) \\ i_{r3}(t) \\ ... \\ i_{rn}(t) \end{pmatrix} + L\frac{d}{dt} \begin{pmatrix} i_{r1}(t) \\ i_{r2}(t) \\ i_{r3}(t) \\ ... \\ i_{rn}(t) \end{pmatrix}$$

où

- R est la résistance d'une phase de la machine et
- L l'inductance d'une phase de la machine.

**12.** Méthode suivant l'une des revendications 8 à 11, **caractérisée en ce que** la détermination des termes de compen-

sation $Ri_r(t) + L\dfrac{di_r(t)}{dt}$ est obtenu soit par un filtre passe-haut soit par un observateur.

**13.** Méthode suivant les revendications 3 et 4, respectivement 3 et 6, **caractérisée en ce que** pour une machine à trois phases à neutre connecté ou phases indépendantes, respectivement pour une machine à quatre phases à neutre isolé, les signaux de commande pour chacune des phases (1≤k≤n) sont déterminés par:

$$i_k^*(t) = i_k(t) + i_r(t)$$

où $i_k(t)$ est la consigne de courant primaire

**14.** Méthode suivant la revendication 3 et 5, **caractérisée en ce que** pour une machine quatre phases à neutre connecté ou phases indépendantes, les signaux de commande pour chacune des phases (1≤k≤n) sont déterminés par:

$$i_1^*(t) = i_1(t) + i_{r1}(t)$$

$$i_2^*(t) = i_2(t) + i_{r2}(t)$$

$$i_3^*(t) = i_3(t) + i_{r1}(t)$$

$$i_4^*(t) = i_4(t) + i_{r2}(t)$$

où $i_k(t)$ est la consigne de courant primaire

**15.** Méthode suivant la revendication 3 et 7, **caractérisée en ce que** pour une machine à n phases, n>4, machine à neutre isolé, les signaux de commande pour chacune des phases (1≤k≤n) sont déterminés par:

$$i_k^*(t) = i_k(t) + \cos\left((k-1)\frac{4\pi}{n}\right)i_{r\alpha}(t) + \sin\left((k-1)\frac{4\pi}{n}\right)i_{r\beta}(t)$$

où $i_k(t)$ est la consigne de courant primaire

**16.** Méthode suivant la revendication 3, **caractérisée en ce que** les résidus sont déterminés par :

$$\begin{pmatrix} i_{r1}(t) \\ i_{r2}(t) \\ i_{r3}(t) \\ ... \\ i_{rn}(t) \end{pmatrix} = \mu_{n,c} \begin{pmatrix} 1 & -c_2 & -c_3 & ... & -c_n \\ -c_n & 1 & -c_2 & ... & -c_{n-1} \\ -c_{n-1} & -c_n & 1 & ... & -c_{n-2} \\ ... & ... & ... & ... & ... \\ -c_2 & -c_3 & ... & ... & 1 \end{pmatrix} \begin{pmatrix} i_{m1}(t) \\ i_{m2}(t) \\ i_{m3}(t) \\ ... \\ i_{mn}(t) \end{pmatrix}$$

où

- $c_2$ à $c_n$ sont des coefficients correcteurs dépendant du nombre de phases et du type de connexion de la machine et
- $\mu_{n,c}$ est un coefficient de pondération dépendant du nombre de phases n et du type de connexion de la machine (c), et les signaux de commande sont déterminés par :

$$\begin{pmatrix} i_1^*(t) \\ i_2^*(t) \\ i_3^*(t) \\ ... \\ i_n^*(t) \end{pmatrix} = \begin{pmatrix} i_1(t) \\ i_2(t) \\ i_3(t) \\ ... \\ i_n(t) \end{pmatrix} + \begin{pmatrix} i_{r1}(t) \\ i_{r2}(t) \\ i_{r3}(t) \\ ... \\ i_{rn}(t) \end{pmatrix}$$

**17.** Dispositif de génération de n, n≥3, signaux de commande ($i_k^*$,$v_k^*$) utilisés pour déterminer les signaux (a) de commutation des interrupteurs (4) d'un onduleur (3) à n phases lui-même destiné à être connecté à une machine électrique (1) opérant à n phases, lequel dispositif est agencé pour générer les signaux de commandes à partir de n signaux primaires de commande ($i_k$,$v_k$) fournis et déterminés par un générateur de consignes (5) faisant partie d'un régulateur de courant (10) à partir d'un couple de référence prédéterminé, lequel onduleur est agencé pour recevoir les signaux de commutation des interrupteurs afin de faire circuler n courants électriques dans la machine pour y produire le couple de référence prédéterminé, lequel dispositif comporte un circuit d'échantillonnage agencé pour échantillonner lors de chacun des cycles de calcul les valeurs instantanées des n courants et mesurées à l'aide de capteurs dans chacune desdites n phases de la machine, **caractérisée en ce que** lequel dispositif comporte également un circuit de calcul agencé pour déterminer des résidus au départ des n valeurs de courant instantanées échantillonnées et pour déterminer ensuite des termes de compensation à partir des résidus déterminés et les additionner aux signaux primaires de commande afin d'obtenir les n signaux de commande ($i_k^*$,$v_k^*$) pour déterminer les signaux (a) de commutation des interrupteurs (4) destinés à commander l'onduleur.

**18.** Dispositif d'entraînement comprenant une machine électrique (1) opérant à n phases, n≥3, un onduleur piloté par des signaux de commutation et un système de commande (7) comprenant un régulateur de courant (10) agencé pour générer les signaux de commande primaires fourni par un générateur de consigne (5) à partir d'un couple de référence prédéterminé, lequel système de commande est agencé pour générer des signaux de commutation à partir des signaux primaires de commande et fournir les signaux de commutation à l'onduleur afin de faire circuler n courants électriques dans la machine pour y produire le couple de référence prédéterminé, lequel dispositif comporte un circuit d'échantillonnage agencé pour échantillonner lors de chacun des cycles de calcul les valeurs instantanées des n courants et mesurées à l'aide de capteurs dans chacune desdites n phases de la machine, **caractérisée en ce que** le dispositif comporte également un circuit de calcul agencé pour déterminer des résidus au départ des n valeurs de courant instantanées échantillonnées et pour déterminer ensuite des termes de compensation à partir des résidus déterminés et les additionner aux signaux primaires de commande afin d'obtenir les n signaux de commande ($i_k^*$,$v_k^*$) pour déterminer les signaux (a) de commutation des interrupteurs (4) destinés à commander l'onduleur.

**Patentansprüche**

**1.** Verfahren zur Erzeugung von n, n≥3, Steuersignalen ($i_k^*$, $v_k^*$), die verwendet werden, um die Schaltsignale (a) der Schalter (4) eines Wechselrichters (3) mit n Phasen zu bestimmen, der mit einer elektrischen Maschine (1) verbunden ist, die in n Phasen arbeitet, wobei die Steuersignale aus n primären Steuersignalen ($i_k$, $v_k$) erzeugt werden, die von einem Sollwertgeber (5) bereitgestellt und bestimmt werden, der Teil eines Stromreglers (10) ist, der ausgebildet ist, um ein vorbestimmtes Referenzmoment zu erhalten, wobei die Schaltsignale auf den Wechselrichter (3) angewendet werden, damit n elektrische Ströme in der Maschine fließen, um dort das vorbestimmte Referenzmoment zu produzieren, wobei mit dem Verfahren mit Hilfe von Sensoren in jeder der n Phasen der Maschine ein Momentanwert des in jeder der Phasen fließenden Stroms gemessen wird, und bei jedem der Berechnungszyklen diese Momentanwerte der n Ströme ($i_{mk}(t)$) gesampelt werden, **dadurch gekennzeichnet, dass** bei jedem der Berechnungszyklen herausgehend von der n gesampelten momentanen Stromwerte Rückstände ($i_r(t)$) bestimmt werden, wobei die Rückstände lineare Kombinationen der gesampelten Ströme sind, und danach Ausgleichstermini aus den Rückständen bestimmt werden, und die Ausgleichstermini zu den primären Steuersignalen addiert werden, um die n Steuersignale ($i_k^*$, $v_k^*$) zu erhalten, um die Schaltsignale (a) der Schalter (4) zu bestimmen, die zur Steuerung des Wechselrichters bestimmt sind.

**2.** Verfahren nach Anspruch 1, **dadurch gekennzeichnet, dass** die n primären Steuersignale ($v_k$), die von dem Sollwertgeber bereitgestellt werden, die n Ausgleichstermini und die n Steuersignale ($v_k^*$) Spannungssollwerte sind, die verwendet werden, um die Schaltsignale (a) der Schalter (4) des Wechselrichters zu bestimmen.

**3.** Verfahren nach Anspruch 1, **dadurch gekennzeichnet, dass** die n primären Steuersignale ($i_k$), die von dem Soll-wertgeber bereitgestellt werden, die n Ausgleichstermini und die n Steuersignale ($i_k$*) Stromsollwerte sind, die verwendet werden, um die Schaltsignale (a) der Schalter (4) des Wechselrichters zu bestimmen.

**4.** Verfahren nach einem der Ansprüche 1 bis 3, **dadurch gekennzeichnet, dass** für eine Maschine mit drei Phasen mit verbundenem Nullleiter oder unabhängigen Phasen der Rückstand $i_r(t)$ bestimmt wird durch:

$$i_r(t) = \frac{i_{m1}(t) + i_{m2}(t) + i_{m3}(t)}{3}$$

wobei $i_{mk}(t)$ ($1 \leq k \leq 3$) der gesampelte Momentanwert des Stroms ist, der der Phase k entspricht.

**5.** Verfahren nach einem der Ansprüche 1 bis 3, **dadurch gekennzeichnet, dass** für eine Maschine mit vier Phasen mit verbundenem Nullleiter oder unabhängigen Phasen zwei Rückstände bestimmt werden durch:

$$\begin{cases} i_{r1}(t) = \dfrac{i_{m1}(t) + i_{m3}(t)}{2} \\ i_{r2}(t) = \dfrac{i_{m2}(t) + i_{m4}(t)}{2} \end{cases}$$

wobei $i_{mk}(t)$ ($1 \leq k \leq 4$) der gesampelte Momentanwert des Stroms ist, der der Phase k entspricht.

**6.** Verfahren nach einem der Ansprüche 1 bis 3, **dadurch gekennzeichnet, dass** für eine Maschine mit vier Phasen mit isoliertem Nullleiter der Rückstand bestimmt wird durch:

$$i_r(t) = \frac{i_{m1}(t) - i_{m2}(t) + i_{m3}(t) - i_{m4}(t)}{4}$$

wobei $i_{mk}(t)$ ($1 \leq k \leq 4$) der gesampelte Momentanwert des Stroms ist, der der Phase k entspricht.

**7.** Verfahren nach einem der Ansprüche 1 bis 3, **dadurch gekennzeichnet, dass** die Rückstände $i_{r\alpha}(t)$ und $i_{r\beta}(t)$ für eine Maschine mit isoliertem Nullleiter, deren Phasenanzahl größer als vier ist, n>4, bestimmt werden durch:

$$\begin{cases} i_{r\alpha}(t) = \dfrac{2}{n} \sum_{k=1}^{n} \cos \dfrac{4\pi(k-1)}{n} \cdot i_{mk}(t) \\ i_{r\beta}(t) = \dfrac{2}{n} \sum_{k=1}^{n} \sin \dfrac{4\pi(k-1)}{n} \cdot i_{mk}(t) \end{cases}$$

wobei die Rückstände mit den Indizes $\alpha$ und $\beta$ orthogonale Signale sind, wobei $i_{mk}(t)$ der gesampelte Momentanwert des Stroms ist, der der Phase k entspricht.

**8.** Verfahren nach den Ansprüchen 2 und 4 beziehungsweise 2 und 6, **dadurch gekennzeichnet, dass** für eine Maschine mit drei Phasen mit verbundenem Nullleiter oder unabhängigen Phasen beziehungsweise für eine Maschine mit vier Phasen mit isoliertem Nullleiter die Steuersignale in elektrischer Spannung für jede der Phasen ($1 \leq k \leq n$) bestimmt werden durch:

$$v_k^\bullet(t) = v_k(t) + Ri_r(t) + L\frac{di_r(t)}{dt}$$

wobei

- $v_k(t)$ das von dem Momentregler für die Phase k produzierte primäre Steuersignal in elektrischer Spannung,
- R der Widerstand einer Phase der Maschine und
- L die Induktivität einer Phase der Maschine ist.

9. Verfahren nach Anspruch 2 und 5, **dadurch gekennzeichnet, dass** für eine Maschine mit vier Phasen mit verbundenem Nullleiter oder unabhängigen Phasen die Signale elektrischer Spannung für jede der Phasen ($1 \leq k \leq n$) bestimmt werden durch:

$$v_1^\bullet(t) = v_1(t) + Ri_{r1} + L\frac{di_{r1}}{dt}$$

$$v_2^\bullet(t) = v_2(t) + Ri_{r2} + L\frac{di_{r2}}{dt}$$

$$v_3^\bullet(t) = v_3(t) + Ri_{r1} + L\frac{di_{r1}}{dt}$$

$$v_4^\bullet(t) = v_4(t) + Ri_{r2} + L\frac{di_{r2}}{dt}$$

wobei

- $v_k(t)$ das von dem Momentregler für die Phase k produzierte primäre Steuersignal in elektrischer Spannung,
- R der Widerstand einer Phase der Maschine und
- L die Induktivität einer Phase der Maschine ist.

10. Verfahren nach Anspruch 2 und 7, **dadurch gekennzeichnet, dass** für eine Maschine mit n Phasen, n>4, mit isoliertem Nullleiter die Steuersignale für jede der Phasen ($1 \leq k \leq n$) bestimmt werden durch:

$$v_k^\bullet(t) = v_k(t) + \cos\left((k-1)\frac{4\pi}{n}\right)\left(Ri_{r\alpha}(t) + L\frac{di_{r\alpha}(t)}{dt}\right)$$
$$+ \sin\left((k-1)\frac{4\pi}{n}\right)\left(Ri_{r\beta}(t) + L\frac{di_{r\beta}(t)}{dt}\right)$$

wobei

- $v_k(t)$ das von dem Momentregler für die Phase k produzierte primäre Steuersignal in elektrischer Spannung,
- R der Widerstand einer Phase der Maschine und
- L die Induktivität einer Phase der Maschine ist.

11. Verfahren nach Anspruch 2, **dadurch gekennzeichnet, dass** die Rückstände bestimmt werden durch:

$$\begin{pmatrix} i_{r1}(t) \\ i_{r2}(t) \\ i_{r3}(t) \\ ... \\ i_{rn}(t) \end{pmatrix} = \mu_{n,c} \begin{pmatrix} 1 & -c_2 & -c_3 & ... & -c_n \\ -c_n & 1 & -c_2 & ... & -c_{n-1} \\ -c_{n-1} & -c_n & 1 & ... & -c_{n-2} \\ ... & ... & ... & ... & ... \\ -c_2 & -c_3 & ... & ... & 1 \end{pmatrix} \begin{pmatrix} i_{m1}(t) \\ i_{m2}(t) \\ i_{m3}(t) \\ ... \\ i_{mn}(t) \end{pmatrix}$$

wobei

- $c_2$ bis $c_n$ Korrekturkoeffizienten sind, die von der Phasenanzahl und vom Verbindungstyp der Maschine abhängen, und
- $\mu_{n,c}$ ein Gewichtungskoeffizient ist, der von der Phasenanzahl (n) und vom Verbindungstyp der Maschine (c) abhängt, und die Steuersignale bestimmt werden durch:

$$\begin{pmatrix} v_1^*(t) \\ v_2^*(t) \\ v_3^*(t) \\ ... \\ v_n^*(t) \end{pmatrix} = \begin{pmatrix} v_1(t) \\ v_2(t) \\ v_3(t) \\ ... \\ v_n(t) \end{pmatrix} + R \begin{pmatrix} i_{r1}(t) \\ i_{r2}(t) \\ i_{r3}(t) \\ ... \\ i_{rn}(t) \end{pmatrix} + L \frac{d}{dt} \begin{pmatrix} i_{r1}(t) \\ i_{r2}(t) \\ i_{r3}(t) \\ ... \\ i_{rn}(t) \end{pmatrix}$$

wobei

- R der Widerstand einer Phase der Maschine und
- L die Induktivität einer Phase der Maschine ist.

12. Verfahren nach einem der Ansprüche 8 bis 11, **dadurch gekennzeichnet, dass** die Bestimmung der Ausgleichstermini $R i_r(t) + L \frac{di_r(t)}{dt}$ entweder durch einen Hochpassfilter oder durch einen Beobachter erfolgt.

13. Verfahren nach den Ansprüchen 3 und 4 beziehungsweise 3 und 6, **dadurch gekennzeichnet, dass** für eine Maschine mit drei Phasen mit verbundenem Nullleiter oder unabhängigen Phasen beziehungsweise für eine Maschine mit vier Phasen mit isoliertem Nullleiter die Steuersignale für jede der Phasen ($1 \leq k \leq n$) bestimmt werden durch:

$$i_k^*(t) = i_k(t) + i_r(t)$$

wobei $i_k(t)$ der Primärstromsollwert ist.

14. Verfahren nach Anspruch 3 und 5, **dadurch gekennzeichnet, dass** für eine Maschine mit vier Phasen mit verbundenem Nullleiter oder unabhängigen Phasen die Steuersignale für jede der Phasen ($1 \leq k \leq n$) bestimmt werden durch:

$$i_1^*(t) = i_1(t) + i_{r1}(t)$$

$$i_2^*(t) = i_2(t) + i_{r2}(t)$$

$$i_3^*(t) = i_3(t) + i_{r1}(t)$$

$$i_4^*(t) = i_4(t) + i_{r2}(t)$$

wobei $i_k(t)$ der Primärstromsollwert ist.

15. Verfahren nach Anspruch 3 und 7, **dadurch gekennzeichnet, dass** für eine Maschine mit n Phasen, n>4, Maschine mit isoliertem Nullleiter, die Steuersignale für jede der Phasen ($1 \leq k \leq n$) bestimmt werden durch:

$$i_k^*(t) = i_k(t) + \cos\left((k-1)\frac{4\pi}{n}\right)i_{r\alpha}(t) + \sin\left((k-1)\frac{4\pi}{n}\right)i_{r\beta}(t)$$

wobei $i_k(t)$ der Primärstromsollwert ist.

16. Verfahren nach Anspruch 3, **dadurch gekennzeichnet, dass** die Rückstände bestimmt werden durch:

$$\begin{pmatrix} i_{r1}(t) \\ i_{r2}(t) \\ i_{r3}(t) \\ ... \\ i_{rn}(t) \end{pmatrix} = \mu_{n,c} \begin{pmatrix} 1 & -c_2 & -c_3 & ... & -c_n \\ -c_n & 1 & -c_2 & ... & -c_{n-1} \\ -c_{n-1} & -c_n & 1 & ... & -c_{n-2} \\ ... & ... & ... & ... & ... \\ & -c_2 & -c_3 & ... & ... & 1 \end{pmatrix} \begin{pmatrix} i_{m1}(t) \\ i_{m2}(t) \\ i_{m3}(t) \\ ... \\ i_{mn}(t) \end{pmatrix}$$

wobei

- $c_2$ bis $c_n$ Korrekturkoeffizienten sind, die von der Phasenanzahl und vom Verbindungstyp der Maschine abhängen, und
- $\mu_{n,c}$ ein Gewichtungskoeffizient ist, der von der Phasenanzahl n und vom Verbindungstyp der Maschine (c) abhängt, und die Steuersignale bestimmt werden durch:

$$\begin{pmatrix} i_1^*(t) \\ i_2^*(t) \\ i_3^*(t) \\ ... \\ i_n^*(t) \end{pmatrix} = \begin{pmatrix} i_1(t) \\ i_2(t) \\ i_3(t) \\ ... \\ i_n(t) \end{pmatrix} + \begin{pmatrix} i_{r1}(t) \\ i_{r2}(t) \\ i_{r3}(t) \\ ... \\ i_{rn}(t) \end{pmatrix}.$$

17. Vorrichtung zur Erzeugung von n, $n \geq 3$, Steuersignalen ($i_k^*$, $v_k^*$), die verwendet werden, um die Schaltsignale (a) der Schalter (4) eines Wechselrichters (3) mit n Phasen zu bestimmen, der selbst bestimmt ist, mit einer elektrischen Maschine (1) verbunden zu sein, die in n Phasen arbeitet, wobei die Vorrichtung ausgebildet ist, um die Steuersignale aus n primären Steuersignalen ($i_k$, $v_k$) zu erzeugen, die von einem Sollwertgeber (5) bereitgestellt und bestimmt werden, der Teil eines Stromreglers (10) ist, aus einem vorbestimmten Referenzmoment, wobei der Wechselrichter ausgebildet ist, um die Schaltsignale der Schalter zu empfangen, damit n elektrische Ströme in der Maschine fließen, um dort das vorbestimmte Referenzmoment zu produzieren, wobei die Vorrichtung eine Samplingschaltung aufweist, die ausgebildet ist, um bei jedem der Berechnungszyklen die Momentanwerte der n Ströme und gemessen mit Hilfe von Sensoren in jeder der n Phasen der Maschine zu sampeln, **dadurch gekennzeichnet, dass** die Vorrichtung ebenfalls eine Berechnungsschaltung aufweist, die ausgebildet ist, um herausgehend von der n gesampelten Momentanstromwerte Rückstände zu bestimmen und um danach Ausgleichstermini aus den bestimmten Rückständen zu bestimmen und sie zu den primären Steuersignalen zu addieren, um die n Steuersignale ($i_k^*$, $v_k^*$) zu erhalten, um die Schaltsignale (a) der Schalter (4) zu bestimmen, die zur Steuerung des Wechselrichters bestimmt sind.

18. Antriebsvorrichtung, umfassend eine elektrische Maschine (1), die in n Phasen, $n \geq 3$, arbeitet, einen von Schaltsignalen gesteuerten Wechselrichter und ein Steuersystem (7), umfassend einen Stromregler (10), der ausgebildet ist, um die primären Steuersignale zu erzeugen, bereitgestellt von einem Sollwertgeber (5) aus einem vorbestimmten Referenzmoment, wobei das Steuersystem ausgebildet ist, um Schaltsignale aus primären Steuersignalen zu erzeugen und die Schaltsignale dem Wechselrichter bereitzustellen, damit n elektrische Ströme in der Maschine fließen, um dort das vorbestimmte Referenzmoment zu produzieren, wobei die Vorrichtung eine Samplingschaltung aufweist, die ausgebildet ist, um bei jedem der Berechnungszyklen die Momentanwerte der n Ströme und gemessen mit Hilfe von Sensoren in jeder der n Phasen der Maschine zu sampeln, **dadurch gekennzeichnet, dass** die Vorrichtung ebenfalls eine Berechnungsschaltung aufweist, die ausgebildet ist, um herausgehend von der n gesampelten Momentanstromwerte die Rückstände zu bestimmen und um danach Ausgleichstermini aus den bestimmten Rückständen zu bestimmen und sie zu den primären Steuersignalen zu addieren, um die n Steuersignale ($i_k$\*, $v_k$\*) zu erhalten, um die Schaltsignale (a) der Schalter (4) zu bestimmen, die zur Steuerung des Wechselrichters bestimmt sind.

## Claims

1. A method for generating n, n≥3, control signals ($i_k$\*,$v_k$\*) used for determining the commutation signals (a) of the switches (4) of an inverter (3) with n phases connected to an electrical machine (1) operating with n phases, which control signals are generated starting from n primary control signals ($i_k$,$v_k$) delivered and determined by an instruction generator (5) which is part of a current regulator (10) provided for obtaining a predetermined reference torque, which commutation signals are applied to the inverter (3) in order to have n electrical currents circulating in the machine in order to produce therein the predetermined reference torque, according to which method there is measured by means of sensors in each of said n phases of the machine an instantaneous value of the current circulating in each of the phases, and wherein at each of the calculation cycles those instantaneous values of the n currents ($i_{mk}(t)$) are sampled, **characterized in that** at each of the calculation cycles residues ($i_r(t)$) are determined starting from the n sampled instantaneous current values, which residues are linear combinations of the sampled currents, and that compensation terms are thereafter determined starting from those residues, and wherein those compensation terms are added to the primary control signals in order to obtain the n control signals ($i_k$\*,$v_k$\*) for determining the commutation signals (a) of the switches (4) destined to control the inverter.

2. The method according to claim 1, **characterized in that** the n primary control signals ($v_k$) delivered by the instruction generator, the n compensation terms and the n control signals ($v_k$\*) are voltage instructions used for determining the commutation signals (a) of the switches (4) of the inverter.

3. The method according to claim 1, **characterized in that** the n primary control signals ($i_k$) delivered by the instruction generator, the n compensation terms and the n control signals ($i_k$\*) are current instructions used for determining the commutation signals (a) of the switches (4) of the inverter.

4. The method according to anyone of the claims 1 to 3, **characterized in that** for a machine with three phases with a connected neutral or independent phases, the residue $i_r(t)$ is determined by:

$$i_r(t) = \frac{i_{m1}(t) + i_{m2}(t) + i_{m3}(t)}{3}$$

where $i_{mk}(t)$ (1≤k≤3) is the sampled instantaneous value of the current corresponding to phase k.

5. The method according to anyone of the claims 1 to 3, **characterized in that** for a machine with four phases with a connected neutral or independent phases, two residues are determined by:

$$\begin{cases} i_{r1}(t) = \dfrac{i_{m1}(t) + i_{m3}(t)}{2} \\ i_{r2}(t) = \dfrac{i_{m2}(t) + i_{m4}(t)}{2} \end{cases}$$

where $i_{mk}(t)$ ($1{\leq}k{\leq}4$) is the sampled instantaneous value of the current corresponding to phase k.

6. The method according to anyone of the claims 1 to 3, **characterized in that** for a machine with four phases with an isolated neutral, the residue is determined by:

$$i_r(t) = \frac{i_{m1}(t) - i_{m2}(t) + i_{m3}(t) - i_{m4}(t)}{4}$$

where $i_{mk}(t)$ ($1{\leq}k{\leq}4$) is the sampled instantaneous value of the current corresponding to phase k.

7. The method according to anyone of the claims 1 to 3, **characterized in that** the residues $i_{r\alpha}(t)$ and $i_{r\beta}(t)$ for a machine with an isolated neutral of which the number of phases is higher than four, n>4, are determined by:

$$\begin{cases} i_{r\alpha}(t) = \frac{2}{n}\sum_{k=1}^{n}\cos\frac{4\pi(k-1)}{n} \cdot i_{mk}(t) \\ i_{r\beta}(t) = \frac{2}{n}\sum_{k=1}^{n}\sin\frac{4\pi(k-1)}{n} \cdot i_{mk}(t) \end{cases}$$

where the residues with indicia $\alpha$ and $\beta$ are orthogonal signals, $i_{mk}(t)$ being the sampled instantaneous current value corresponding to the phase k.

8. The method as claimed in the claims 2 and 4, respectively 2 and 6, **characterized in that** for a machine with three phases with a connected neutral or independent phases, respectively for a machine with four phases with an isolated neutral, the control signals in electrical voltage for each of the phases ($1{\leq}k{\leq}n$) are determined by:

$$v_k^*(t) = v_k(t) + Ri_r(t) + L.\frac{di_r(t)}{dt}$$

where

- $v_k(t)$ is the primary control signal in electrical voltage produced by the torque regulator for the phase k
- R the resistance of a phase of the machine and
- L the inductance of a phase of the machine.

9. The method according to the claims 2 and 5, **characterized in that** for a machine with four phases with a connected neutral or independent phases, the electrical voltage signals for each of the phases ($1{\leq}k{\leq}n$) are determined by:

$$v_1^*(t) = v_1(t) + Ri_{r1} + L\frac{di_{r1}}{dt}$$

$$v_2^*(t) = v_2(t) + Ri_{r2} + L\frac{di_{r2}}{dt}$$

$$v_3^*(t) = v_3(t) + Ri_{r1} + L\frac{di_{r1}}{dt}$$

$$v_4^*(t) = v_4(t) + Ri_{r2} + L\frac{di_{r2}}{dt}$$

where

- $v_k(t)$ is the primary control signal in electrical voltage produced by the torque regulator for the phase k
- R the resistance of a phase of the machine and
- L the inductance of a phase of the machine.

**10.** The method as claimed in claim 2 and 7, **characterized in that** for a machine with n phases, n>4, with isolated neutral, the control signals for each of the phases (1≤k≤n) are determined by:

$$v_k^*(t) = v_k(t) + \cos\left((k-1)\frac{4\pi}{n}\right)\left(Ri_{r\alpha}(t) + L\frac{di_{r\alpha}(t)}{dt}\right)$$
$$+ \sin\left((k-1)\frac{4\pi}{n}\right)\left(Ri_{r\beta}(t) + L\frac{di_{r\beta}(t)}{dt}\right)$$

where

- $v_k(t)$ is the primary control signal in electrical voltage produced by the torque regulator for the phase k
- R the resistance of a phase of the machine and
- L the inductance of a phase of the machine.

**11.** The method according to claim 2, **characterized in that** the residue are determined by:

$$
\begin{pmatrix} i_{r1}(t) \\ i_{r2}(t) \\ i_{r3}(t) \\ \dots \\ i_{rn}(t) \end{pmatrix} = \mu_{n,c} \begin{pmatrix} 1 & -c_2 & -c_3 & \dots & -c_n \\ -c_n & 1 & -c_2 & \dots & -c_{n-1} \\ -c_{n-1} & -c_n & 1 & \dots & -c_{n-2} \\ \dots & \dots & \dots & \dots & \dots \\ -c_2 & -c_3 & \dots & \dots & 1 \end{pmatrix} \begin{pmatrix} i_{m1}(t) \\ i_{m2}(t) \\ i_{m3}(t) \\ \dots \\ i_{mn}(t) \end{pmatrix}
$$

where

- $c_2$ to $c_n$ are correcting coefficients depending on the number of phases and the type of connection of the machine and
- $\mu_{n,c}$ is a weighing coefficient depending of the number of phases (n) and the type of connections of the machine (c), and the control signals are determined by:

$$
\begin{pmatrix} v_1^*(t) \\ v_2^*(t) \\ v_3^*(t) \\ \dots \\ v_n^*(t) \end{pmatrix} = \begin{pmatrix} v_1(t) \\ v_2(t) \\ v_3(t) \\ \dots \\ v_n(t) \end{pmatrix} + R \begin{pmatrix} i_{r1}(t) \\ i_{r2}(t) \\ i_{r3}(t) \\ \dots \\ i_{rn}(t) \end{pmatrix} + L\frac{d}{dt} \begin{pmatrix} i_{r1}(t) \\ i_{r2}(t) \\ i_{r3}(t) \\ \dots \\ i_{rn}(t) \end{pmatrix}
$$

where

- R is the resistance of a phase of the machine and
- L the inductance of a phase of the machine.

12. The method as claimed in anyone of the claims 8 to 11, **characterized in that** the determination of the compensation terms

$$Ri_r(t) + L\frac{di_r(t)}{dt}$$

is obtained either by a low-pass filter or by an observer.

13. The method according to the claims 3 and 4, respectively 3 and 6, **characterized in that** for a machine with three phases with a connected neutral or independent phases, respectively for a machine with four phases with an isolated neutral, the control signals for each of the phases ($1 \le k \le n$) are determined by:

$$i_k^*(t) = i_k(t) + i_r(t)$$

where $i_k(t)$ is the primary current instruction.

14. The method as claimed in claims 3 and 5, **characterized in that** for a machine with four phases with a connected neutral or independent phases, the control signals of each of the phases ($1 \le k \le n$) are determined by:

$$i_1^*(t) = i_1(t) + i_{r1}(t)$$

$$i_2^*(t) = i_2(t) + i_{r2}(t)$$

$$i_3^*(t) = i_3(t) + i_{r1}(t)$$

$$i_4^*(t) = i_4(t) + i_{r2}(t)$$

where $i_k(t)$ is the primary current instruction.

15. The method as claimed in claims 3 and 7, **characterized in that** for a machine with n phases, n>4, and with isolated neutral, the control signals for each of the phases ($1 \le k \le n$) are determined by:

$$i_k^*(t) = i_k(t) + \cos\left((k-1)\frac{4\pi}{n}\right)i_{r\alpha}(t) + \sin\left((k-1)\frac{4\pi}{n}\right)i_{r\beta}(t)$$

where ik(t) is the primary current indicator.

16. The method according to claim 3, **characterized in that** the residues are determined by:

$$\begin{pmatrix} i_{r1}(t) \\ i_{r2}(t) \\ i_{r3}(t) \\ ... \\ i_{rn}(t) \end{pmatrix} = \mu_{n,c} \begin{pmatrix} 1 & -c_2 & -c_3 & ... & -c_n \\ -c_n & 1 & -c_2 & ... & -c_{n-1} \\ -c_{n-1} & -c_n & 1 & ... & -c_{n-2} \\ ... & ... & ... & ... & ... \\ -c_2 & -c_3 & ... & ... & 1 \end{pmatrix} \begin{pmatrix} i_{m1}(t) \\ i_{m2}(t) \\ i_{m3}(t) \\ ... \\ i_{mn}(t) \end{pmatrix}$$

where

- $c_2$ to $c_n$ are correcting coefficients depending of the number of phases and the type of connection of the machine and
- $\mu_{n,c}$ is a weighing coefficient depending of the number of phases n and the type of connection of the machine (c), and the control signals are determined by :

$$\begin{pmatrix} i_1^*(t) \\ i_2^*(t) \\ i_3^*(t) \\ ... \\ i_n^*(t) \end{pmatrix} = \begin{pmatrix} i_1(t) \\ i_2(t) \\ i_3(t) \\ ... \\ i_n(t) \end{pmatrix} + \begin{pmatrix} i_{r1}(t) \\ i_{r2}(t) \\ i_{r3}(t) \\ ... \\ i_{rn}(t) \end{pmatrix}$$

17. A device for generating n, n≥3, control signals ($i^*_k$, $v^*_k$) used for determining the commutation signals (a) of switches (4) of an inverter (3) with n phases itself destined to be connected to an electrical machine (1) operating with n phases, which device is provided for generating control signals starting from primary command signals ($i_k$,$v_k$) delivered and determined from a predetermined reference torque by an instruction generator (5) being part of a current regulator (10), which inverter is provided for receiving the commutation signals of switches in order to have electrical currents circulating in the machine for producing therein the predetermined reference torque, which device comprises a sampling circuit provided for sampling within each calculation cycle instantaneous current values and measured by means of sensors in each of said n phases of the machine, **characterized in that** said device also comprises a calculation circuit provided for determining residues starting from the n sampled instantaneous current values and for determining thereafter compensation terms starting from the determined residues and adding them to the primary control signals in order to obtain the n control signals ($i^*_k$, $v^*_k$) for determining the commutation signals (a) of the switches (4) provided for controlling the inverter.

18. Propulsion device comprising an electrical machine operating with n phases, n≥3, an inverter controlled by commutation signals and a control system (7) comprising a current regulator (10) provided for generating primary control signals delivered by an instruction generator (5) starting from a predetermined reference torque, which control system is provided for generating commutation signals starting from primary command signals and furnishing commutation signals to the inverter in order to have n electrical currents circulating in the machine for producing therein the predetermined reference torque, which device comprises a sampling circuit provided for sampling instantaneous current values within each calculation cycle and measured by means of sensors in each of said n phases of the machine, **characterized in that** said device also comprises a calculation circuit provided for determining residues starting from the n sampled instantaneous current values and for determining thereafter the compensation terms starting from the determined residues and adding them to the primary control signals in order to obtain the n control signals ($i^*_k$, $v^*_k$) for determining the commutation signals (a) of the switches (4) provided for controlling the inverter.

a)

b)

**Figure 1**

**Figure 2**

Figure 3

a)

b)

Figure 4

EP 2 852 050 B1

$i_{1ref}$

$i_{3ref}$   $i_{2ref}$

**Figure 5**

$i_1=0$

$i_3 \longleftarrow \begin{array}{c} i_1=0 \\ \bullet \end{array} \longrightarrow i_2$   $i_3 \swarrow \quad \searrow i_2$

a)   b)

**Figure 6**

T(pu)

Consigne de couple moteur

Couple réalisé

a)

i(pu)

b)

**Figure 7**

Figure 8

a)

b)

Figure 9

Figure 10

EP 2 852 050 B1

$$\cos\left(\frac{16\pi}{5}\right) \cdot i_{r\alpha} = -0.809 i_{r\alpha}$$

$$\cos\left(\frac{4\pi}{5}\right) \cdot i_{r\alpha} = -0.809 i_{r\alpha}$$

$$\cos\left(\frac{12\pi}{5}\right) \cdot i_{r\alpha} = 0.309 i_{r\alpha}$$

$$\cos\left(\frac{8\pi}{5}\right) \cdot i_{r\alpha} = 0.309 i_{r\alpha}$$

$i_5$    $i_{1ref}$    $i_2$

$i_{5ref}$

$i_1 = 0$    $i_{r\beta} = 0$

$i_{2ref}$

$i_{4ref}$    $i_{3ref}$

$i_4$    $i_{r\alpha}$    $i_3$

Figure 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110221366 A

- US 6949908 B

**Littérature non-brevet citée dans la description**

- **LIU TIAN-HUA et al.** A strategy for improving reliability of field oriented controlled induction motor drives. *Proceedings of the industry applications society annual meeting,* 28 Septembre 1991, 449-455
- **FRANÇOIS BAUDART ; BRUNO DEHEZ ; ERNEST MATAGNE ; DAN TELTEU-NEDELCU ; PAUL ALEXANDRE ; FRANCIS LABRIQUE.** Torque Control Strategy of Polyphase Permanent-Magnet Synchronous Machines With Minimal Controller Reconfiguration Under Open-Circuit Fault of One Phase. *IEEE transaction on Industrial Electronics,* Juin 2012, vol. 59 (6), 2632-2644

- **WERNER LEONHARD.** Control of Electrical Drives. Springer, 2001
- **F. BAUDART ; F. LABRIQUE ; E. MATAGNE ; D. TELTEU ; P. ALEXANDRE.** Calcul d'une matrice de Concordia étendue pour des machines synchrones polyphasées segmentées en marche normale et en marche dégradée. *Proceedings de la conférence Electronique du Futur 2009, EF 2009,* Septembre 2009, 24-25